# EUROPEAN PATENT SPECIFICATION

(11) **EP 3 705 312 B1**
(45) Date of publication and mention of the grant of the patent: **04.10.2023**
(21) Application number: 18873541.9
(22) Date of filing: 26.10.2018
(51) Int. Cl.: B60C 11/03

(54) **PNEUMATIC TIRE**
LUFTREIFEN
PNEU

(30) Priority: 31.10.2017 JP 2017210729
(43) Date of publication of application: 09.09.2020
(73) Proprietor: The Yokohama Rubber Co., Ltd., Minato-ku Tokyo 105-8685 (JP)
(72) Inventor: ISHIZAKA, Takahide, Hiratsuka-shi Kanagawa 254-8601 (JP)
(74) Representative: Dilg, Haeusler, Schindelmann Patentanwaltsgesellschaft mbH
(86) International application number: PCT/JP2018/039947
(87) International publication number: WO 2019/087980

(56) References cited:
- EP-A1- 2 578 419
- WO-A1-2007/099084
- WO-A1-2013/051053
- WO-A1-2015/056573
- DE-A1-102011 051 387
- JP-A- 2008 222 074
- JP-A- 2013 154 654
- JP-A- 2017 001 523

## Description

### Technical Field

The present invention relates to a pneumatic tire.

### Background Art

In the related art, pneumatic tires for the purpose of suppressing noise in a block pattern and improving uneven wear resistance are known. For example, a pneumatic tire is known in which circumferential main grooves are disposed in a zigzag manner such that the zigzags are out of alignment with one another in the circumferential direction (for example, JP 2012-76658 A).

WO 2013/051053 A1 discloses a pneumatic tire for heavy load, which exhibits good performance in both fuel efficiency and water drainage characteristics. The tire comprises circumferential main grooves extending in a tire circumferential direction and land portions defined by the circumferential main grooves, the plurality of land portions comprising blocks separated from one another by lug grooves and arranged side by side in the tire circumferential direction. A ratio of a tire lateral direction length of an arrangement range of the blocks to a developed tread width is not less than 0.55 and not more than 0.70, a ratio of a groove width of the circumferential main grooves, other than outermost circumferential main grooves adjacent to tire lateral direction outermost land portions of the plurality of land portions, to the developed tread width is not less than 0.007 and not more than 0.024, a ratio of a groove width of the outermost circumferential main grooves to the developed tread width is not less than 0.025 and not more than 0.055, a ratio of a groove width of each of the lug grooves to the developed tread width is not less than 0.003 and not more than 0.016 and for a set of the land opposite each other across the tire equatorial plane, a range taken up in the tire circumferential direction by each of the lug grooves in one of the land portions is included in a range taken up in the tire circumferential direction by the corresponding block in the other land portion.
EP 2 578 419 A1 and DE 10 2011 051387 A1 relate to pneumatic tires with improved uneven wear resistance while keeping running performance on wet and icy roads. The tires comprise circumferential main grooves extending in a tire circumferential direction and land portions defined by the circumferential main grooves, the plurality of land portions comprising blocks separated from one another by lug grooves and arranged side by side in the tire circumferential direction.

### Summary of Invention

### Technical Problem

For the known pneumatic tire described above, there is room for improving a rolling resistance coefficient (PPC), while keeping a balance between traction characteristics, uneven wear resistance, and quietness.

In light of the foregoing, an object of the present invention is to provide a pneumatic tire that can improve the rolling resistance coefficient, while keeping a balance between the traction characteristics, uneven wear resistance, and quietness.

### Solution to Problem

In order to solve the problem described above and to achieve the object, a pneumatic tire according to an aspect of the present invention includes: five or more circumferential main grooves extending in a tire circumferential direction; and a plurality of land portions defined by the circumferential main grooves, the plurality of land portions including blocks separated from one another by lug grooves and arranged side by side in the tire circumferential direction; a ratio of a tire lateral direction length of an arrangement range of the blocks to a developed tread width being not less than 0.55 and not more than 0.70; a ratio of a groove width of the circumferential main grooves, other than outermost circumferential main grooves adjacent to tire lateral direction outermost land portions of the plurality of land portions, to the developed tread width being not less than 0.007 and not more than 0.024 and to a groove width of the outermost circumferential main grooves being not less than 0.15 and not more than 0.45; a ratio of a groove width of the outermost circumferential main grooves to the developed tread width being not less than 0.25 and not more than 0.55; a ratio of a groove width of each of the lug grooves to the developed tread width being not less than 0.003 and not more than 0.016; and for a set of the land portions opposite each other across the tire equatorial plane, a range taken up in the tire circumferential direction by each of the lug grooves in one of the land portions being included in a range taken up in the tire circumferential direction by the corresponding block in the other land portion. Additionally, for sets of the land portions opposite each other across a tire equatorial plane, in each of the sets of the land portions, positions, in the tire circumferential direction, of blocks adjacent in the tire lateral direction are the same. The pneumatic tire further includes shoulder lug grooves formed in each of the shoulder land portions and extending in the tire lateral direction, and a ratio of a groove depth of each of the shoulder lug grooves to a groove depth of each of the circumferential main grooves is preferably not less than 0.03 and not more than 0.5. The shoulder lug grooves include first shoulder lug grooves and second shoulder lug grooves having different groove widths, and the first shoulder lug grooves and the second shoulder lug grooves are disposed in the shoulder land portions alternately in the tire circumferential direction.

For all of the lug grooves, a tire lateral direction inner end portion may be biased toward one side in a tire rotation direction compared to a tire lateral direction outer end portion.

Preferably, for the set of the land portions opposite each other across the tire equatorial plane, assuming that D11 and D12 denote distances from a tire circumferential direction center line of the range taken up in the tire circumferential direction by each of the lug grooves in one of the land portions to end portions of the range taken up in the tire circumferential direction by the corresponding block in the other land portion, 0.65 ≤ D11/D12 ≤ 1.65.

Preferably, for the same land portion of the plurality of land portions, a ratio of a tire circumferential direction length of the lug groove to a tire circumferential direction length of the block is not less than 0.2 and not more than 0.6.

Preferably, an aspect ratio of each of the blocks forming the land portion is not less than 1.05 and not more than 1.65.

Preferably, the lug groove includes at least one bend point, and a ratio of a length, from a tire circumferential direction end portion of the block to the bend point along the tire circumferential direction, to the tire circumferential direction length of the block is not less than 0.1 and not more than 0.4.

Preferably, the pneumatic tire further includes a notch portion formed on at least one side of each of the blocks, the side facing the corresponding circumferential main groove, a ratio of a tire circumferential direction maximum length of the notch portion to the tire circumferential direction maximum length of the block is not less than 0.015 and not more than 0.070, and a ratio of a tire lateral direction maximum length of the notch portion to a tire lateral direction maximum length of the block is not less than 0.007 and not more than 0.035.

Preferably, a ratio of a tire lateral direction length of the block to the developed tread width is not less than 0.15 and not more than 0.2.

Preferably, a ratio of an arrangement pitch length of the blocks in the tire circumferential direction to a tire outer circumference length along the tire circumferential direction is not less than 0.010 and not more than 0.030.

Preferably, the pneumatic tire further includes shoulder land portions provided outward of the outermost circumferential main grooves in a tire lateral direction, and a ratio of a tire lateral direction length of each of the land portions other than the shoulder land portions to a tire lateral direction length of each of the shoulder land portions is not less than 0.70 and not more than 1.00.

Preferably, a ratio of the tire lateral direction length of the shoulder land portion to a tire circumferential direction length of a ground contact surface of a tread portion is not more than 0.20.

The pneumatic tire includes shoulder lug grooves formed in each of the shoulder land portions and extending in the tire lateral direction, and a ratio of a groove depth of each of the shoulder lug grooves to a groove depth of each of the circumferential main grooves is preferably not less than 0.03 and not more than 0.5.

The shoulder lug grooves include first shoulder lug grooves and second shoulder lug grooves having different groove widths, and the first shoulder lug grooves and the second shoulder lug grooves are disposed in the shoulder land portions alternately in the tire circumferential direction.

### Advantageous Effects of Invention

The pneumatic tire according to an embodiment of the present invention can improve the rolling resistance coefficient, while keeping a balance between the traction characteristics, uneven wear resistance, and quietness.

### Brief Description of Drawings

FIG. 1 is a cross-sectional view in a tire meridian direction illustrating a pneumatic tire according to an embodiment of the present invention.
FIG. 2 is a developed view illustrating a tread pattern of the pneumatic tire.
FIG. 3 is an enlarged view of a part of land portions on the left side of FIG. 2 with respect to a tire equatorial plane, the part being included in the tread portion illustrated in FIG. 2.
FIG. 4 is an enlarged view of a part of land portions on the right side of FIG. 2 with respect to the tire equatorial plane, the part being included in the tread portion illustrated in FIG. 2.
FIG. 5 is an enlarged view of a part of land portions opposite each other across the tire equatorial plane, the part being included in the tread portion illustrated in FIG. 2.
FIG. 6 is an enlarged view illustrating lug grooves that separate a first land portion and a second land portion into blocks.
FIG. 7 is an enlarged view of the vicinity of notch portions.
FIG. 8 is a diagram illustrating another example of the configuration of the tread portion.
FIG. 9 is a diagram illustrating another example of the configuration of the tread portion.
FIG. 10 is a diagram illustrating another example of the configuration of the tread portion.

### Description of Embodiments

Embodiments of the present invention will be described in detail below with reference to the drawings. Herein, components in the following description of each of the embodiments that are identical or similar to those of the other embodiments have the same reference signs, and descriptions of those components are either simplified or omitted. However, the present invention is not limited by the embodiments. Constituents of the embodiments include elements that are essentially identical or that can be replaced or easily conceived by one skilled in the art. Note that a plurality of modified examples described in the embodiment can be combined as desired within the scope apparent to one skilled in the art.

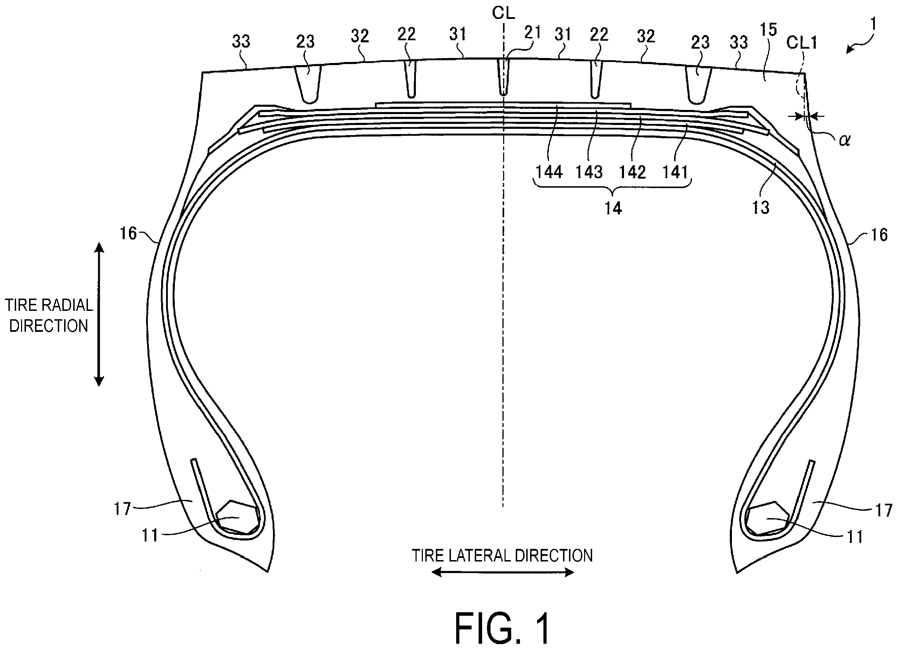

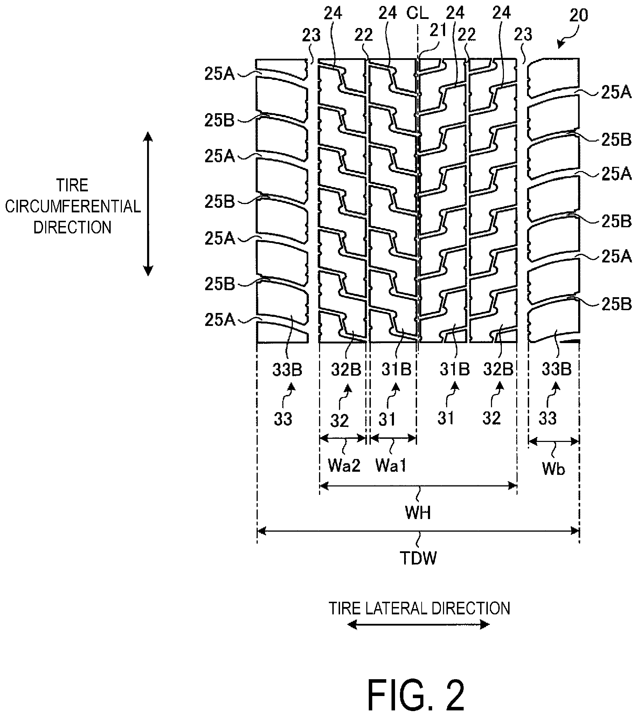

FIG. 1 is a cross-sectional view in a tire meridian direction illustrating a pneumatic tire 1 according to an embodiment of the present invention. FIG. 1 illustrates a cross-sectional view of a half region of the pneumatic tire 1 (hereinafter, also referred to simply as the "tire 1") in the tire radial direction. FIG. 2 is a developed view illustrating a tread pattern of the pneumatic tire 1.

In FIG. 1, "cross section in a tire meridian direction" refers to a cross section of the tire taken along a plane that includes the tire rotation axis (not illustrated). Reference sign CL denotes the tire equatorial plane and refers to a plane normal to the tire rotation axis that passes through the center point of the tire in the tire rotation axis direction. "Tire lateral direction" refers to the direction parallel with the tire rotation axis. "Tire radial direction" refers to the direction perpendicular to the tire rotation axis.

In FIG. 1, the pneumatic tire 1 includes a pair of bead cores 11, 11, a carcass layer 13, a belt layer 14, tread rubber 15 forming a tread portion 20, sidewall rubbers 16, 16 forming left and right sidewall portions, and rim cushion rubbers 17, 17 forming left and right bead portions. The belt layer 14 has a multilayer structure including five belt plies. In FIG. 1, the belt layer 14 is a multilayer structure including a large-angle belt 141, a pair of cross belt plies 142, 143, and a belt cover 144. A bead filler is provided outward of each of the bead cores 11 in the tire radial direction. Note that the tire internal structure described above represents a typical example for a pneumatic tire, and the pneumatic tire is not limited thereto.

### Tread Portion

As illustrated in FIG. 2, the tread portion 20 includes a first circumferential main groove 21 extending in the tire circumferential direction at the position of a tire equatorial plane CL and further includes, on both sides of the tire equatorial plane CL, a pair of second circumferential main grooves 22 extending in the tire circumferential direction at positions outward of the first circumferential main groove 21 in the tire lateral direction and a pair of third circumferential main grooves 23 extending in the tire circumferential direction at positions outward of the respective second circumferential main grooves 22 in the tire lateral direction.

The first circumferential main groove 21, the second circumferential main grooves 22, and the third circumferential main grooves 23 are five circumferential main grooves extending in the tire circumferential direction. The second circumferential main grooves 22 and the third circumferential main grooves 23 are preferably disposed at laterally symmetrical positions about the tire equatorial plane CL. The first circumferential main groove 21, the second circumferential main grooves 22, and the third circumferential main grooves 23 each have a groove depth of, for example, not less than 13 mm and not more than 23 mm. Note that the first circumferential main groove 21, the second circumferential main grooves 22, and the third circumferential main grooves 23 are each obligated to include, at a groove bottom, a wear indicator specified by JATMA.

Here, the first circumferential main groove 21 is assumed to have a groove width W1, each of the second circumferential main grooves 22 has a groove width W2, and each of the third circumferential main grooves 23 has a groove width W3. The groove width W3 of the third circumferential main grooves 23 is larger than the groove width W1 of the first circumferential main groove 21 and the groove width W2 of the second circumferential main grooves 22. The groove width is the distance between the opposing wall surfaces of the groove.

The groove width W1 and the groove width W2 are, for example, not less than 1 mm and not more than 5 mm. The groove width W3 is, for example, not less than 5 mm and not more than 15 mm. Note that the groove width W1 of the first circumferential main groove 21, the groove width W2 of the second circumferential main grooves 22, and the groove width W3 of the third circumferential main grooves 23 are not limited to the ranges described above.

The tread portion 20 is partitioned into a plurality of land portions due to the formation of the first circumferential main groove 21, the second circumferential main grooves 22, and the third circumferential main grooves 23. Specifically, in the tread portion 20, the land portion between the first circumferential main groove 21 and each of the second circumferential main grooves 22 forms a first land portion 31 extending in the tire circumferential direction. The first land portion 31 is separated into a plurality of blocks 31B by lug grooves 24 extending in the tire lateral direction. In other words, the first land portion 31 includes the plurality of blocks 31B separated by the lug grooves 24 and arranged side by side in the tire circumferential direction.

In the tread portion 20, the land portion between each of the second circumferential main grooves 22 and the corresponding third circumferential main grooves 23 forms a second land portion 32 extending in the tire circumferential direction. The second land portion 32 is separated into a plurality of blocks 32B by the lug grooves 24 extending in the tire lateral direction. In other words, the second land portion 32 includes the plurality of blocks 32B separated by the lug grooves 24 and arranged side by side in the tire circumferential direction.

As illustrated in FIG. 2, the tread portion 20 has a directional pattern in which, for all of the lug grooves 24, a tire lateral direction inner end portion is biased toward one side in a tire rotation direction compared to a tire lateral direction outer end portion. For example, in a case where the upper side of FIG. 2 corresponds to a trailing side in the tire rotation direction and the lower side of FIG. 2 corresponds to a leading side in the tire rotation direction, for all of the lug grooves 24, the tire lateral direction inner end portion is biased toward the leading side compared to the tire lateral direction outer end portion. In other words, for the sets of the land portions 31 and 32 opposite each other across the tire equatorial plane CL, the lug grooves 24 are inclined with respect to the tire lateral direction such that inclination directions of the lug grooves 24 are based on a V shape. In a case where the lug grooves 24 for the sets of the land portions 31 and 32 opposite each other across the tire equatorial plane CL are inclined like a V shape, traction performance is improved.

In the tread portion 20, the ratio of a tire lateral direction length WH of an arrangement range of the blocks 31B and 32B to a developed tread width TDW is preferably not less than 0.55 and not more than 0.70 and more preferably not less than 0.60 and not more than 0.65. By disposing wide blocks in this range, the rigidity of the tread portion 20 can be increased, and the rolling resistance coefficient of the tread portion 20 can be reduced. Here, in the tread portion 20, tire lateral direction lengths of the blocks 31B and 32B are designated as Wa1 and Wa2. The length WH is a width including all of the block rows except shoulder portions, that is, WH = W1 + 2 × Wa1 + 2 × W2 + 2 × Wa2. Both ratios, Wa1/TDW and Wa2/TDW, of the lengths Wa1 and Wa2 to the developed tread width TDW are preferably not less than 0.15 and not more than 0.20. The rigidity of each of the blocks decreases consistently with the ratios Wa1/TDW and Wa2/TDW. The ratios Wa1/TDW and Wa2/TDW in the range described above allow drainage performance to be improved while suppressing the rolling resistance. The developed tread width TDW is a distance in the tire lateral direction between both outer ends of third land portions 33 corresponding to two shoulder land portions. "Developed tread width TDW" refers to the linear distance between both ends of the tread portion 20 of the tire 1 in a developed view, measured in a state of the tire 1 being mounted on a specified rim and inflated to a specified internal pressure, with no load applied thereto.

Additionally, in the tread portion 20, the ratio of the groove width of the first circumferential main groove 21 and the second circumferential main grooves 22, other than the outermost third circumferential main grooves 23 adjacent to the tire lateral direction outermost land portions of the plurality of land portions, to the developed tread width TDW is preferably not less than 0.007 and not more than 0.024 and more preferably not less than 0.010 and not more than 0.020. In the tread portion 20, both ratios, W1/W3 and W2/W3, of the groove width W1 and the groove width W2 of the first circumferential main groove 21 and the second circumferential main grooves 22, other than the outermost third circumferential main grooves 23, to the groove width W3 of the outermost third circumferential main grooves 23 is preferably not less than 0.15 and not more than 0.45 and more preferably not less than 0.30 and not more than 0.40.

In this way, in the tread portion 20, the first land portions 31 and the second land portions 32 are defined by the first circumferential main groove 21 and the second circumferential main grooves 22, which have small groove widths, thus the first circumferential main groove 21 and the second circumferential main grooves 22 are closed at the time of contact with the ground, and the blocks 31B and 32B act as wide blocks. The wide blocks including the blocks 31B and 32B can reduce the rolling resistance coefficient.

Furthermore, in the tread portion 20, the ratio of the groove width W3, of the outermost third circumferential main grooves 23 in the tire lateral direction, to the developed tread width TDW is preferably not less than 0.025 and not more than 0.055 and more preferably not less than 0.030 and not more than 0.050. In the tread portion 20, the ratio of the groove width of each of the lug grooves 24 to the developed tread width TDW is preferably not less than 0.003 and not more than 0.016 and more preferably not less than 0.007 and not more than 0.012.

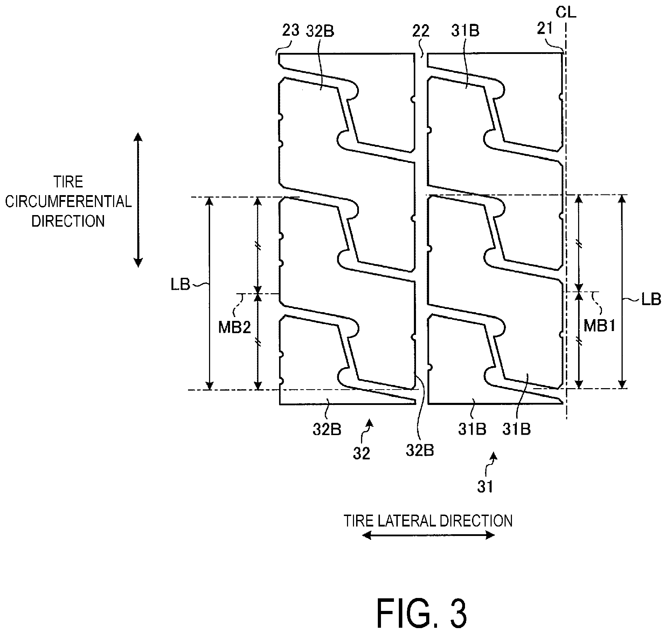

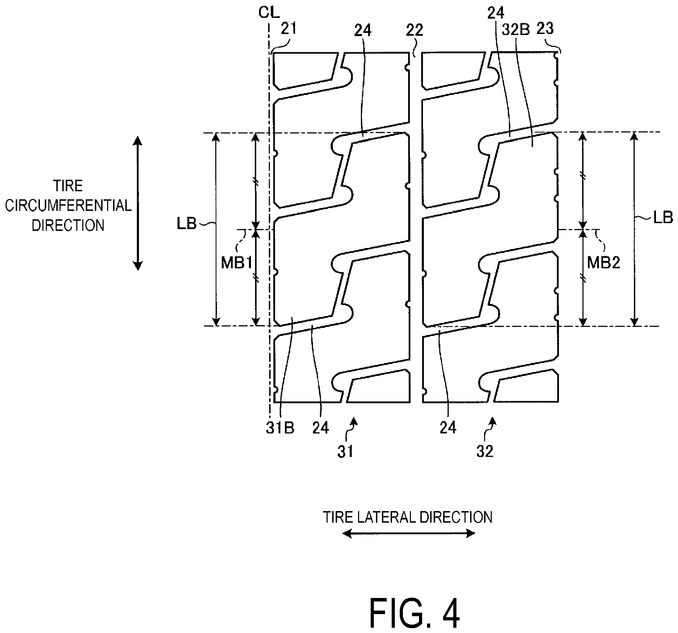

For the sets of the land portions 31 and 32 opposite each other across the tire equatorial plane CL, in each of the sets of the land portions 31 and 32, the ratio, of the tire circumferential direction lengths, up to the midpoint positions of the tire circumferential direction lengths of the blocks 31B and 32B, to the tire circumferential direction maximum length of the blocks 31B and 32B in the land portions 31 and 32 is preferably not less than 0.90 and not more than 1.10. This means that the positions of the blocks 31B and 32B in the tire circumferential direction are substantially the same. This will be described with reference to FIGS. 3 and 4.

FIG. 3 is an enlarged view of a part of the set of the land portions 31 and 32 on the left side of FIG. 2 with respect to the tire equatorial plane CL, the part being included in the tread portion 20 illustrated in FIG. 2. With reference to FIG. 3, for the land portion 31 on the left side respect to the tire equatorial plane CL, a midpoint position of the tire circumferential direction length of the block 31B in the land portion 31 is designated as MB1, and a midpoint position of the tire circumferential direction length of the block 32B in the land portion 32 is designated as MB2. The distances up to the midpoint position MB1 and the midpoint position MB2 in the tire circumferential direction are tire circumferential direction lengths up to the midpoint positions of the tire circumferential direction lengths. The ratio of the tire circumferential direction lengths, up to the midpoint positions of the tire circumferential direction lengths, to a tire circumferential direction maximum length LB of the blocks in the land portions 31 and 32 is preferably not less than 0.90 and not more than 1.10.

FIG. 4 is an enlarged view of a part of the land portions 31 and 32 on the right side of FIG. 2 with respect to the tire equatorial plane CL, the part being included in the tread portion 20 illustrated in FIG. 2. With reference to FIG. 4, for the land portion 31 on the right side respect to the tire equatorial plane CL, the midpoint position of the tire circumferential direction length of the block 31B in the land portion 31 is designated as MB1, and the midpoint position of the tire circumferential direction length of the block 32B in the land portion 32 is designated as MB2. The distances up to the midpoint position MB1 and the midpoint position MB2 in the tire circumferential direction are tire circumferential direction lengths up to the midpoint positions of the tire circumferential direction lengths. Preferably, the ratio of the tire circumferential direction lengths, up to the midpoint positions of the tire circumferential direction lengths to the tire circumferential direction maximum length LB of each of the blocks in the land portions 31 and 32 is not less than 0.90 and not more than 1.10.

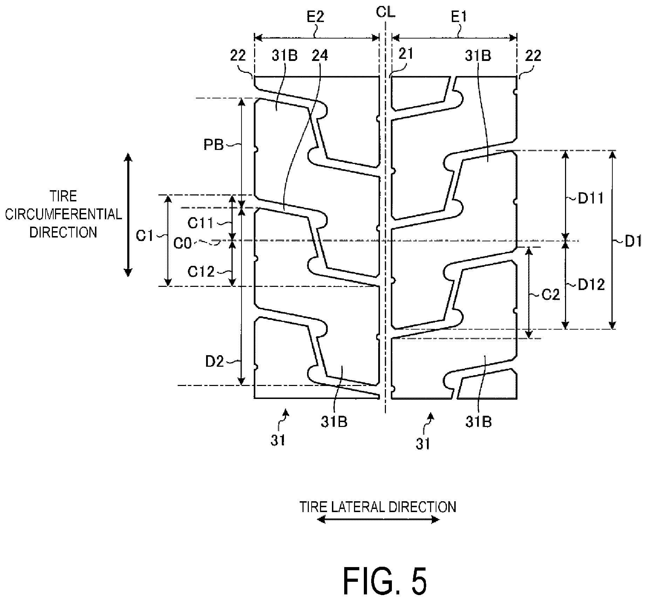

For a set of the land portions 31 opposite each other across the tire equatorial plane CL, a range taken up in the tire circumferential direction by each of the lug grooves 24 in one of the land portions 31 is preferably included in a range taken up in the tire circumferential direction by the corresponding block 31B in the other land portion 31. This means that the positions of the left and right land portions across the tire equatorial plane CL are misaligned with each other in the tire circumferential direction. Now, this will be described with reference to FIG. 5.

FIG. 5 is an enlarged view of a part of the land portions 31, 31 opposite each other across the tire equatorial plane CL, the part being included in the tread portion 20 illustrated in FIG. 2. With reference to FIG. 5, preferably, in the left and right land portions 31, 31 closest to the tire equatorial plane CL, a range C1 taken up in the tire circumferential direction by each of the lug grooves 24 in the left land portion 31 is included in a range D1 taken up in the tire circumferential direction by the corresponding block 31B in the right land portion 31. In other words, preferably, the range D1 completely includes the range C1. Additionally, in FIG. 5, a range C2 taken up in the tire circumferential direction by each of the lug grooves 24 in the right land portion 31 is preferably included in a range D2 taken up in the tire circumferential direction by the corresponding block 31B in the left land portion 31. In other words, preferably, the range D2 completely includes the range C2. As described with reference to FIG. 5, the left and right land portions 31, 31 opposite each other across the tire equatorial plane CL are misaligned with each other in the tire circumferential direction. The misalignment in the tire circumferential direction enables a reduction in noise when the pneumatic tire 1 comes into contact with the ground.

Additionally, in FIG. 5, for the left and right land portions 31, 31 across the tire equatorial plane CL and both closest to the tire equatorial plane CL, the range C1 that is taken up in the tire circumferential direction by the lug groove 24 in one of the land portions is assumed. Furthermore, a tire circumferential direction center line C0 is assumed at which distances C11 and C12 from the respective end portions of the range C1 in the tire circumferential direction are equal. Additionally, the center line C0 is extended in the tire lateral direction, and distances D11 and D12, from the center line C0 to each of the end portions of the range D1 that is taken up in the tire circumferential direction by the corresponding block 31B in the other land portion, are assumed. In this case, preferably, the ratio, D11/D12, of the distance D11 to the distance D12 is 0.65 ≤ D11/D12 ≤ 1.65. In a case where the value of the ratio of the distance D11 to the distance D12 is in this range, the noise reduction effect is large. In a case where the ratio, D11/D12, of the distance D11 to the distance D12 is a value close to 1.0, the center line C0 of the lug groove 24 tends to be closer to the center of the range D1 taken up by the block 31B in the tire circumferential direction. Thus, in a case where the ratio D11/D12 is 1.0, the noise reduction effect is more significant.

Furthermore, in FIG. 5, a length of the range D1 of the block 31B in the tire circumferential direction is designated as LD1, and a length of the range C1 of the lug groove 24 in the tire circumferential direction is designated as LC1. Preferably, in the same land portion of the plurality of land portions 31, 31, the ratio of the length LC1 to the length LD1 is preferably a value not less than 0.2 and not more than 0.6. The same applies to the blocks 32B and the lug grooves 24 in the other land portions 32. The value of the ratio LC1/LD1 in this range improves a traction effect and an uneven wear resistance effect. Note that the lengths LC1 and LC2 of the ranges C1 and C2 in the tire circumferential direction are each preferably not more than 10.0 mm.

In a case where the ratio LC1/LD1 = 0, the lug grooves 24 are parallel with the tire lateral direction. Conversely, an increased value of the ratio LC1/LD1 increases the angle of the lug grooves 24 with respect to the tire lateral direction and makes the lug grooves 24 more similar to a V shape.

The ratio of the vertical length to the horizontal length of each of the blocks 31B forming the land portion 31, that is, the aspect ratio of the block 31B, is preferably not less than 1.05 and not more than 1.65 and more preferably not less than 1.15 and not more than 1.50. The same applies to the blocks 32B in the other land portions 32. The aspect ratio in this range improves the rolling resistance suppressing effect and the uneven wear resistance effect. The aspect ratio is each of the ratios of the maximum values of the lengths LD1 and LD2 of the ranges D1 and D2 of the blocks 31B in the tire circumferential direction to the maximum values of lengths E1 and E2 of the blocks 31B in the tire lateral direction.

Preferably, the ratio of an arrangement pitch length PB of the blocks 31B in the tire circumferential direction to a tire outer circumference length along the tire circumferential direction is not less than 0.010 and not more than 0.030. The tire outer circumference length can be calculated by multiplying the diameter of the pneumatic tire 1 by the circumference ratio n. The diameter of the pneumatic tire 1 is measured in a state of the pneumatic tire 1 being mounted on the specified rim and inflated to the specified internal pressure (for example, 900 kPa), with no load applied thereto.

Here, "specified rim" refers to an "applicable rim" specified by the JATMA, a "Design Rim" specified by the TRA, or a "Measuring Rim" specified by the ETPTO. Additionally, "specified internal pressure" refers to a "maximum air pressure" defined by JATMA, to the maximum value in "TIRE LOAD LIMITS AT VARIOUS COLD INFLATION PRESSURES" defined by TRA, or to "INFLATION PRESSURES" defined by ETPTO. Additionally, "specified load" refers to a "maximum load capacity" defined by JATMA, the maximum value in "TIRE LOAD LIMITS AT VARIOUS COLD INFLATION PRESSURES" defined by TPA, or "LOAD CAPACITY" defined by ETPTO. However, in the case of JATMA, for a passenger vehicle tire, the specified internal pressure is an air pressure of 180 kPa, and the specified load is 88% of the maximum load capacity.

### Lug Groove

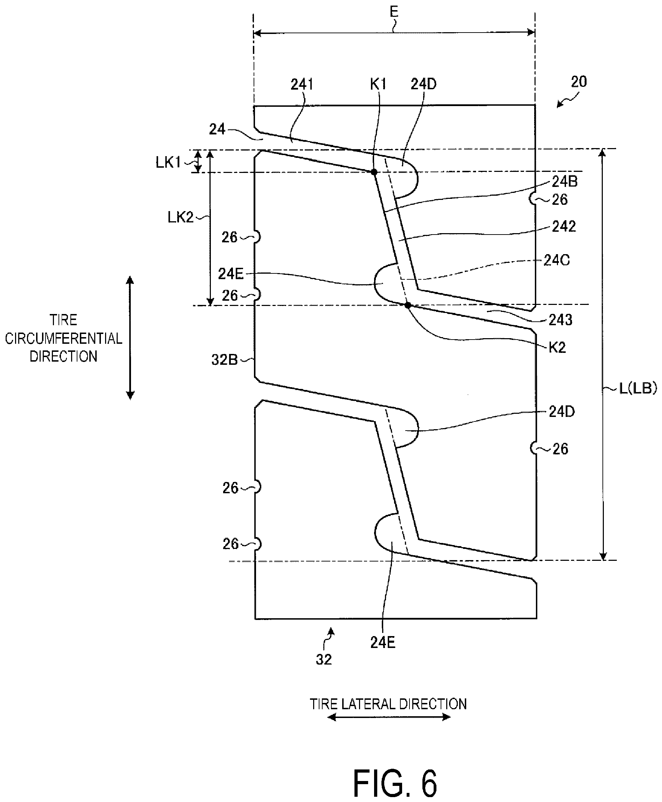

FIG. 6 is an enlarged view illustrating the lug grooves 24 that separate the first land portion 31 and the second land portion 32 into blocks. In the tread portion 20 illustrated in FIG. 6, each of the lug grooves 24 in the present example includes bend points K1 and K2. The bend points K1 and K2 are points at which the extension direction of the grooves changes. As illustrated in FIG. 6, each of the lug grooves 24 includes the two bend points K1 and K2. In any case, each of the lug grooves 24 may include at least one bend point.

In FIG. 6, the lug groove 24 in the present example includes a groove 241, a groove 243, and a groove 242. The lug groove 24 in the present example includes the bend point K1 between the groove 241 and the groove 242 and the bend point K2 between the groove 243 and the groove 242. In the present example, the bend point K2 is a point where an imaginary line 24C corresponding to an extension of a groove wall 24B of the groove 242 abuts against a groove wall of the groove 243.

The groove 241 extends in a direction at a predetermined angle with respect to the tire lateral direction, and the bend point K1 is a boundary position between the groove 241 and the groove 242 where the extension direction changes to increase the angle with respect to the tire lateral direction. Similarly, the groove 243 extends in a direction at a predetermined angle with respect to the tire lateral direction, and the bend point K2 is a boundary position between the groove 242 and the groove 243 where the extension direction changes to increase the angle with respect to the tire lateral direction.

The tread portion 20 includes a rounded portion 24D at an end portion of the groove 241 in the vicinity of the bent point K1. The tread portion 20 includes a rounded portion 24E at an end portion of the groove 243 in the vicinity of the bent point K2. The rounded portion 24D and the rounded portion 24E can prevent cracking likely to be caused by bending of the lug groove 24.

Here, lengths, from the tire circumferential direction end portion of the block 32B to the bend points K1 and K2 along the tire circumferential direction, are designated as LK1 and LK2. Preferably, both ratios, LK1/L and LK2/L, of the lengths LK1 and LK2 to a length L of the block 32B in the tire circumferential direction are not less than 0.1 and not more than 0.4. In a case where the ratios LK1/L and LK2/L are in these ranges, the bend points K1 and K2 are at appropriate positions, and the blocks support one another to increase the rigidity of the tread portion 20 to reduce the rolling resistance coefficient, while producing the traction effect. Note that the lug groove 24 preferably has a groove depth DL of not less than 5.0 mm and not more than 20.0 mm.

### Notch Portion

In FIG. 6, the tread portion 20 further includes a notch portion 26 formed on at least one side of each of the blocks 32B in the second land portions 32, the side facing the corresponding circumferential main groove. The same applies to each of the blocks 31B in the first land portion 31. The notch portion 26 functions to improve the uneven wear resistance of an end portion of the block 32B. The notch portion 26 achieves effects similar to those of multiple sipes. In a case where the tread rubber 15 that can reduce the rolling resistance coefficient is used, formation of sipes may often lead to cracks in the sipes. Thus, the tread portion 20 in the present example includes the notch portion 26 as an alternative to the sipes.

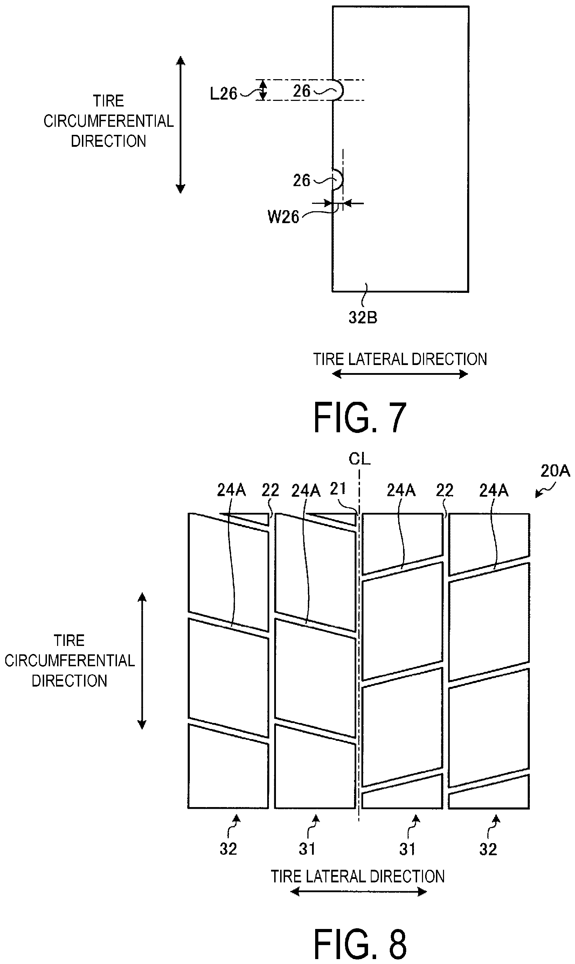

FIG. 7 is an enlarged view of the vicinity of the notch portions 26. In FIGS. 6 and 7, the ratio of a tire circumferential direction maximum length L26 of the notch portion 26 to the tire circumferential direction maximum length LB of the block 32B is preferably not less than 0.015 and not more than 0.070 and more preferably not less than 0.030 and not more than 0.055. Furthermore, the ratio of a tire lateral direction maximum length W26 of the notch portion 26 to a tire lateral direction maximum length E of the block 32B is preferably not less than 0.007 and not more than 0.035 and more preferably not less than 0.015 and not more than 0.028.

### Shoulder Portion

With reference back to FIG. 2, the third land portions 33 each correspond to the land portion located outward of the third circumferential main grooves 23 corresponding to the outermost circumferential main grooves. The third land portion 33 is a shoulder land portion located in a shoulder portion of the tread portion 20. The third land portion 33 is separated into a plurality of blocks 33B by first shoulder lug grooves 25A and second shoulder lug grooves 25B extending in the tire lateral direction. Thus, the third land portion 33 is configured such that the plurality of separated blocks 33B are arranged side by side in the tire circumferential direction.

Preferably, the ratio of the tire lateral direction length of the land portions other than the third land portions 33 to a tire lateral direction length of the third land portion 33, corresponding to a shoulder land portion, is not less than 0.70 and not more than 1.00. Preferably, assuming that Wa1 denotes the tire lateral direction length of the first land portion 31, which is a land portion other than the third land portion 33, and that Wa2 denotes the tire lateral direction length of the second land portion 32, which is a land portion other than the third land portion 33, both ratios, Wa1/Wb and Wa2/Wb, of the tire lateral direction lengths of the land portions other than the third land portion 33 to a tire lateral direction length Wb of the third land portion 33 are preferably not less than 0.70 and not more than 1.00.

Here, a length in the tire circumferential direction of the ground contact surface of the tread portion 20 is designated as TL (not illustrated). Preferably, the ratio, Wb/TL, of the tire lateral direction length Wb of the third land portion 33, corresponding to the shoulder land portion, to the tire circumferential direction length TL of the ground contact surface of the tread portion 20 is not more than 0.20. The tire circumferential direction length TL of the ground contact surface of the tread portion 20 is measured in a state of the pneumatic tire 1 being mounted on the specified rim and inflated to the specified internal pressure, with no load applied thereto.

### Shoulder Lug Groove

The tread portion 20 includes shoulder lug grooves 25A and 25B traversing each of the third land portions 33, corresponding to the shoulder land portion. The first shoulder lug grooves 25A and the second shoulder lug grooves 25B have different groove widths. The first shoulder lug grooves 25A and the second shoulder lug grooves 25B are disposed in the third land portion 33 alternately in the tire circumferential direction.

Here, the first circumferential main groove 21, the second circumferential main grooves 22, and the third circumferential main grooves 23 are assumed to have a groove depth GD. The first shoulder lug grooves 25A and the second shoulder lug grooves 25B are assumed have a groove depth DLo. The ratio, DLo/GD, of the groove depth DLo to the groove depth GD is not less than 0.03 and not more than 0.5. Preferably, the first shoulder lug grooves 25A and the second shoulder lug grooves 25B have a groove width Wo of not less than 0.5 mm and not more than 5.0 mm.

With reference back to FIG. 1, in the pneumatic tire 1, an angle a between a line CL1 parallel with the tire equatorial plane CL and a tire lateral direction outer side surface of the third land portion 33, corresponding to the shoulder land portion, that is, the outermost land portion in the tire lateral direction of the plurality of land portions, is not less than 5 deg. and not more than 20 deg.

### Other Configuration Examples of Tread Portion

As described above, for the sets of the land portions 31 and 32 opposite each other across the tire equatorial plane CL, the inclination directions of the lug grooves 24 are based on a V shape, thus improving the traction performance. For improved traction performance, in the tread portion 20, the lug grooves 24 need not include any bend point. FIG. 8 is a diagram illustrating another example of the configuration of the tread portion. As illustrated in FIG. 8, a tread portion 20A includes lug grooves 24A. Each of the lug grooves 24A includes no bend point. For all of the lug grooves 24A in the tread portion 20A illustrated in FIG. 8, a tire lateral direction inner end portion is biased toward one side in the tire rotation direction compared to a tire lateral direction outer end portion. Thus, as in FIG. 2, for the sets of the first land portion 31 and the second land portion 32 opposite each other across the tire equatorial plane CL, the lug grooves 24A are inclined such that the inclination directions of the lug grooves 24A are based on a V shape. For the sets of the land portions 31 and 32 opposite each other across the tire equatorial plane CL, the inclination directions of the lug grooves 24A, based on a V shape, contribute to improving the traction performance. According to the tread portion 20A illustrated in FIG. 8, on each side, opposite each other across the tire equatorial plane CL, among each set of the blocks forming the first land portion 31 and the second land portion 32, the set of the blocks adjacent in the tire lateral direction are disposed at the same position in the tire circumferential direction. This allows the load applied at the time of contact with the ground to be made uniform and enables suppression of heel-and-toe uneven wear.

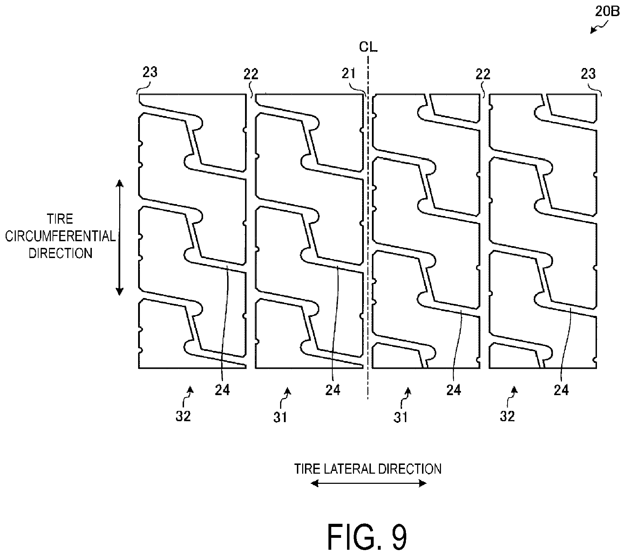

Additionally, the bending of the lug grooves 24 enables an increase in the rigidity of the tread portion 20 and a reduction in rolling resistance coefficient. For increased rigidity and a reduced rolling resistance coefficient of the tread portion 20, the inclination directions of the lug grooves 24 in the tread portion 20 need not be based on a V shape. FIG. 9 is a diagram illustrating another example of the configuration of the tread portion. As illustrated in FIG. 9, a tread portion 20B includes the lug grooves 24 each including a bent point. However, unlike in FIGS. 2 and 8, for the sets of the first land portion 31 and the second land portion 32 opposite each other across the tire equatorial plane CL, the inclination directions of the lug grooves 24 are not based on a V shape. However, in a case where the bent points K1 and K2 are at the appropriate positions in the lug groove 24, the rigidity of the tread portion 20B is increased due to the support between the blocks, the rolling resistance coefficient is reduced, and the traction effect is obtained. According to the tread portion 20B illustrated in FIG. 9, on each side, opposite each other across the tire equatorial plane CL, among each set of the blocks forming the first land portion 31 and the second land portion 32, the set of the blocks adjacent in the tire lateral direction are disposed at the same position in the tire circumferential direction. This allows the load applied at the time of contact with the ground to be made uniform and enables improvement in heel-and-toe uneven wear.

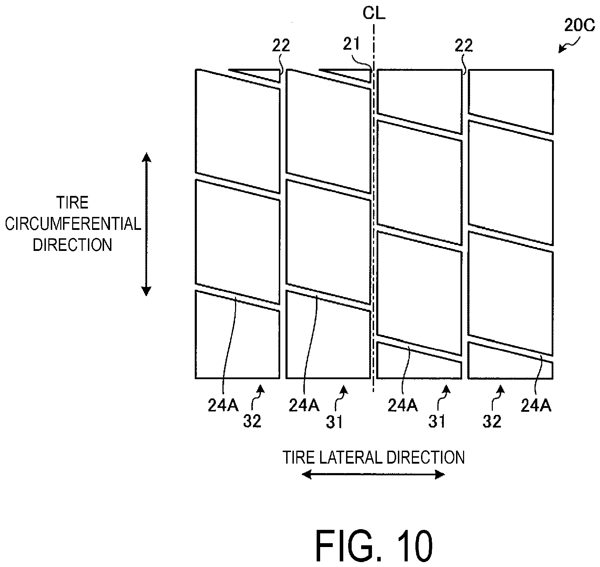

Incidentally, for a reduced rolling resistance coefficient, the first land portions 31 and the second land portions 32 may be defined by the first circumferential main groove 21 and the second circumferential main grooves 22, which have small groove widths, and at the time of contact with the ground, the first circumferential main groove 21 and the second circumferential main grooves 22 may be closed to cause the blocks 31B and 32B to act as wide blocks. In order to achieve this effect, the lug grooves 24 need not be bent, and the inclination directions of the lug grooves 24 need not be based on a V shape. FIG. 10 is a diagram illustrating another example of the configuration of the tread portion. As illustrated in FIG. 10, in a tread portion 20C, the lug grooves 24A are not bent. Additionally, the inclination directions of the lug grooves 24A are not based on a V shape. Even in the case illustrated in FIG. 10, at the time of contact with the ground, the first circumferential main groove 21 and the second circumferential main grooves 22 are closed to cause the blocks 31B and 32B to act as wide blocks, enabling a reduction in rolling resistance coefficient. According to the tread portion 20C illustrated in FIG. 10, on each side, opposite each other across the tire equatorial plane CL, among each set of the blocks forming the first land portion 31 and the second land portion 32, the set of the blocks adjacent in the tire lateral direction are disposed at the same position in the tire circumferential direction. This allows the load applied at the time of contact with the ground to be made uniform and enables improvement in heel-and-toe uneven wear.

### Conclusion

According to the pneumatic tire 1 in the present example, the grooves are closed to form wide rib blocks at the time of contact with the ground, allowing the rolling resistance reduction performance to be improved. Additionally, according to the pneumatic tire 1 in the present example, the directional pattern is used and the lug grooves based on a V shape are formed, allowing traction characteristics to be improved. Furthermore, according to the pneumatic tire 1 in the present example, the blocks are disposed at the same position to make the load applied at the time of contact with the ground uniform, enabling improvement in heel-and-toe uneven wear. Additionally, according to the pneumatic tire 1 in the present example, the lug grooves are prevented from communicating with one another, enabling a reduction in pass-by noise.

### Examples

Tables 1 to 5 are tables indicating the results of performance tests of pneumatic tires according to the embodiment of the present invention. In the performance tests, a plurality of types of test tires were evaluated for rolling resistance reduction performance, traction performance, pass-by noise (PBN) performance, and uneven wear resistance performance. The size of the pneumatic tire 1 used for evaluation is 315/70R22.5. The vehicle used for evaluation is a vehicle in which a trailer is connected to a 6 × 4 tractor.

In the evaluation of the rolling resistance reduction performance, an indoor drum testing machine is used. In the evaluation of the rolling resistance reduction performance, the test tires were inflated to a regular internal pressure, and resistance was measured at a load of 4 kN and a speed of 50 km/h. The measurement results are expressed as index values and evaluated with Comparative Example 1 being assigned as the reference (100). In the evaluation, larger index values indicate a smaller rolling resistance coefficient and thus superior rolling resistance reduction performance.

In the evaluation of the traction performance, wet grip performance is measured. Measurement of the wet grip performance is based on braking tests on an asphalt road surface at a water depth of 5 mm, and the resultant braking distance is expressed as an index and evaluated with Comparative Example 1 being assigned the value of 100. Larger index values indicate superior traction performance.

The evaluation of pass-by noise performance is based on the magnitude of vehicle exterior pass-by noise measured according to the tire noise test method set forth in ECE R117-02 (ECE Regulation No.117 Revision 2). In the test, the test vehicle starts to run at a sufficient distance from a noise measurement section, the engine is stopped before reaching the section, and the vehicle is kept coasting. In the noise measurement section, the maximum noise value dB (noise value in a frequency range from 800 Hz to 1200 Hz) is measured at eight or more equal speed intervals into which a speed range of ±10 km/h from a reference speed is divided, with the average determined to be vehicle exterior pass-by noise. The maximum noise value dB is a sound pressure dB(A) measured through an A-characteristic frequency correction circuit using a stationary microphone installed at an intermediate point in the noise measurement section and at a lateral distance of 7.5 m from a traveling center line at a height of 1.2 m from the road surface. For the pass-by noise, the measurement results are expressed as index values, with Comparative Example 1 being assigned as the reference (0 dB), and smaller values indicate lower sound pressures dB and superior noise performance for the pass-by noise.

For the uneven wear resistance performance, a rim equipped with the pneumatic tire 1 is mounted on a drive shaft of the 6 × 4 tractor of the vehicle, and the amount of heel-and-toe wear is measured after 40 thousand kilometers of traveling. The measurement results are expressed as index values. The rim equipped with the pneumatic tire 1 is 22.5 × 9.00 in size and is inflated to an air pressure of 900 kPa.

Additionally, tires of Comparative Example 1, Comparative Example 2, and Comparative Example 3 were prepared as comparative objects and evaluated for the rolling resistance reduction performance, traction performance, pass-by noise performance, and uneven wear resistance performance, as described above. The tire of Comparative Example 1 includes four circumferential main grooves extending in the tire circumferential direction and a plurality of land portions defined by the circumferential main grooves. The plurality of land portions include blocks separated from one another by lug grooves and arranged side by side in the tire circumferential direction, the ratio of the tire lateral direction range of the blocks to the developed tread width is 0.63, the ratio of the groove width of the circumferential main grooves, other than the outermost circumferential main grooves adjacent to the tire lateral direction outermost land portions of the plurality of land portions, to the developed tread width is 0.030 and to the groove width of the outermost circumferential main grooves is 0.50, the ratio of the groove width of the outermost circumferential main grooves to the developed tread width is 0.040, the ratio of the groove width of each of the lug grooves to the developed tread width is 0.020, for sets of the land portions opposite each other across the tire equatorial plane, in each of the sets of the land portions, the ratio of the tire circumferential direction lengths, up to the midpoint positions of the tire circumferential direction lengths of the blocks, to the tire circumferential direction maximum length of the blocks in the land portions is 1.20, and for a set of the land portions opposite each other across the tire equatorial plane, the range taken up in the tire circumferential direction by each groove in one of the land portions is included in the range taken up in the tire circumferential direction by the corresponding block in the other land portion. In the tire of Comparative Example 1, the lug grooves do not have the directional pattern in which the tire lateral direction inner end portion is biased toward one side in the tire rotation direction compared to the tire lateral direction outer end portion, and the inclination of the lug grooves is not based on a V shape.

The tire of Comparative Example 2 includes five circumferential main grooves extending in the tire circumferential direction and a plurality of land portions defined by the circumferential main grooves, the plurality of land portions include blocks separated from one another by lug grooves and arranged side by side in the tire circumferential direction, the ratio of the tire lateral direction range of the blocks to the developed tread width is 0.63, the ratio of the groove width of the circumferential main grooves, other than the outermost circumferential main grooves adjacent to the tire lateral direction outermost land portions of the plurality of land portions, to the developed tread width is 0.015 and to the groove width of the outermost circumferential main grooves is 0.35, the ratio of the groove width of the outermost circumferential main grooves to the developed tread width is 0.010, the ratio of the groove width of each of the lug grooves to the developed tread width is 0.010, for sets of the land portions opposite each other across the tire equatorial plane, in each of the sets of the land portions, the ratio of the tire circumferential direction lengths, up to the midpoint positions of the tire circumferential direction lengths of the blocks, to the tire circumferential direction maximum length of the blocks in the land portions is 1.20, and for a set of the land portions opposite each other across the tire equatorial plane, the range taken up in the tire circumferential direction by each groove in one of the land portions is not included in the range taken up in the tire circumferential direction by the corresponding block in the other land portion. In the tire of Comparative Example 2, the lug grooves have the directional pattern in which the tire lateral direction inner end portion is biased toward one side in the tire rotation direction compared to the tire lateral direction outer end portion, and the inclination of the lug grooves is based on a V shape.

The tire of Comparative Example 3 includes five circumferential main grooves extending in the tire circumferential direction and a plurality of land portions defined by the circumferential main grooves, the plurality of land portions include blocks separated from one another by lug grooves and arranged side by side in the tire circumferential direction, the ratio of the tire lateral direction range of the blocks to the developed tread width is 0.50, the ratio of the groove width of the circumferential main grooves, other than the outermost circumferential main grooves adjacent to the tire lateral direction outermost land portions of the plurality of land portions, to the developed tread width is 0.015 and to the groove width of the outermost circumferential main grooves is 0.35, the ratio of the groove width of the outermost circumferential main grooves to the developed tread width is 0.040, the ratio of the groove width of each of the lug grooves to the developed tread width is 0.010, for sets of the land portions opposite each other across the tire equatorial plane, the ratio of the tire circumferential direction lengths, up to midpoint positions of the tire circumferential direction lengths of the blocks, to the tire circumferential direction maximum length of the blocks in the land portions is 1.20, and for a set of the land portions opposite each other across the tire equatorial plane, the range taken up in the tire circumferential direction by each groove in one of the land portions is included in the range taken up in the tire circumferential direction by the corresponding block in the other land portion. In the tire of Comparative Example 3, the lug grooves have the directional pattern in which the tire lateral direction inner end portion is biased toward one side in the tire rotation direction compared to the tire lateral direction outer end portion, and the inclination of the lug grooves is not based on a V shape.

As indicated in Tables 1 to 5, the pneumatic tires of Examples 1 to 51 include five circumferential main grooves (the first circumferential main groove 21, the second circumferential main grooves 22, and the third circumferential main grooves 23) extending in the tire circumferential direction and a plurality of land portions defined by the circumferential main grooves (the first land portions 31, the second land portions 32, and the third land portions 33), and each of the plurality of land portions includes blocks separated from one another by lug grooves and arranged side by side in the tire circumferential direction.

Additionally, in the pneumatic tires of Examples 1 to 51, the ratio of the tire lateral direction range of the blocks to the developed tread width (block row setting range) ranges from not less than 0.55 to not more than 0.70, the ratio of the groove width of the circumferential main grooves, other than the outermost circumferential main grooves adjacent to the tire lateral direction outermost land portions of the plurality of land portions, to the developed tread width (circumferential narrow main groove width/developed tread width) is not less than 0.007 and not more than 0.024 and to the groove width of the outermost circumferential main grooves (circumferential narrow main groove width/outermost circumferential main groove width) is not less than 0.15 and not more than 0.45, the ratio of the groove width of the outermost circumferential main grooves to the developed tread width (outermost circumferential main groove width/developed tread width) is not less than 0.025 and not more than 0.055, the ratio of the groove width of each of the lug grooves to the developed tire width is not less than 0.003 and not more than 0.016, for sets of the land portions opposite each other across the tire equatorial plane, in each of the sets of the land portions, the ratio of the tire circumferential direction lengths, up to midpoint positions of the tire circumferential direction lengths of the blocks, to the tire circumferential direction maximum length of the blocks in the land portions (block position) is not less than 0.90 and not more than 1.10, and for a set of the land portions opposite each other across the tire equatorial plane, the range taken up in the tire circumferential direction by each groove in one of the land portions is included in the range taken up in the tire circumferential direction by the corresponding block in the other land portion (range D including range C).

In the pneumatic tires of Examples 23 to 51, all of the lug grooves have a directional pattern in which the tire lateral direction inner end portion is biased toward one side in the tire rotation direction compared to the tire lateral direction outer end portion, and the inclination of the lug grooves is based on a V shape.

In the pneumatic tires of Examples 24 to 51, for the set of the land portions opposite each other across the tire equatorial plane, assuming that D11 and D12 denote the distances from the tire circumferential direction center line of the range taken up in the tire circumferential direction by each of the lug grooves in one of the land portions to each of the end portions of the range taken up in the tire circumferential direction by the corresponding block in the other land portion, block row misalignment, D11/D12, is 0.65 ≤ D11/D12 ≤ 1.65.

In the pneumatic tires of Examples 26 to 51, in the same land portion of the plurality of land portions, the ratio of the tire circumferential direction length of each of the lug grooves to the tire circumferential direction length of the corresponding block (lug groove arrangement range C1/E1) is not less than 0.2 and not more than 0.6.

In the pneumatic tires of Examples 28 to 51, the aspect ratio of each of the blocks forming the land portion is not less than 1.05 and not more than 1.65.

In the pneumatic tires of Examples 32 to 51, the lug groove includes at least one bend point, and the ratio of the length, from the tire circumferential direction end portion of the block to the bend point along the tire circumferential direction, to the tire circumferential direction length of the block (bend point position) is not less than 0.1 and not more than 0.4.

The pneumatic tires of Examples 34 to 51 further include a notch portion formed on at least one side of each of the blocks, the side facing the corresponding circumferential main groove, the ratio of the tire circumferential direction maximum length of the notch portion to the tire circumferential direction maximum length of the block (tire circumferential direction maximum length of the notch portion/tire circumferential direction maximum length of the block) is not less than 0.015 and not more than 0.070, and the ratio of the tire lateral direction maximum length of the notch portion to the tire lateral direction maximum length of the block (tire lateral direction maximum length of the notch portion/tire lateral direction maximum length of the block) is not less than 0.007 and not more than 0.035.

In the pneumatic tires of Examples 42 to 51, the ratio of the tire lateral direction length of each of the blocks to the developed tread width (tire lateral direction length of block/developed tread width) is not less than 0.15 and not more than 0.2.

In the pneumatic tires of Example 44 to Example 51, the ratio of the arrangement pitch length of the blocks in the tire circumferential direction to the tire outer circumference length along the tire circumferential direction (block arrangement pitch length/tire outer circumference length) is not less than 0.010 and not more than 0.030.

The pneumatic tires of Examples 46 to 51 further include shoulder land portions provided outward of the outermost circumferential main grooves in the tire lateral direction, and the ratio of the tire lateral direction length of the land portions other than the shoulder land portions to the tire lateral direction length of the shoulder land portions (other land portions width/shoulder land portion width) is not less than 0.70 and not more than 1.00.

In the pneumatic tires of Examples 48 to 51, the ratio of the tire lateral direction length of the shoulder land portions to the tire lateral direction length of the ground contact surface of the tread portion (shoulder land portion width/tread ground contact length) is not more than 0.20.

In the pneumatic tires of Examples 49 to 51, the shoulder land portion further includes shoulder lug grooves extending in the tire lateral direction, and the ratio of the groove depth of each of the shoulder lug grooves to the groove depth of each of the circumferential main grooves (shoulder lug groove depth/circumferential main groove depth) is not less than 0.03 and not more than 0.5.

According to Examples 1 to 51, favorable results are obtained in a case where the directional pattern is provided and the inclination of the lug grooves is based on a V shape, a case where the block row misalignment D11/D12 is 0.65 ≤ D11/D12 ≤ 1.65, a case where the arrangement range C1/D1 of the lug grooves is not less than 0.2 and not more than 0.6, a case where the aspect ratio of each of the blocks forming the land portion is not less than 1.05 and not more than 1.65, a case where the ratio of the length, from the tire circumferential direction end portion of the block to the bend point along the tire circumferential direction, to the tire circumferential direction length of the block is not less than 0.1 and not more than 0.4, a case where the tire circumferential direction maximum length of the notch portion/tire circumferential direction maximum length of the block is not less than 0.015 and not more than 0.070, a case where the tire lateral direction maximum length of the notch portion/tire lateral direction maximum length of the block is not less than 0.007 and not more than 0.035, a case where the tire lateral direction length of the block/developed tread width is not less than 0.15 and not more than 0.2, a case where the block arrangement pitch length/tire outer circumference length is not less than 0.010 and not more than 0.030, a case where the other land portions width/shoulder land portion width is not less than 0.70 and not more than 1.00, a case where the shoulder land portion width/tread ground contact length is not more than 0.20, and a case where the shoulder lug groove depth/circumferential main groove depth is not less than 0.03 and not more than 0.5.

**[Table 1-1]**

| | Comparative Example 1 | Comparative Example 2 | Example 1 | Example 2 | Example 3 |
|---|---|---|---|---|---|
| Number of circumferential main grooves | 4 | 5 | 5 | 5 | 5 |
| Block row setting range | 0.63 | 0.63 | 0.55 | 0.70 | 0.60 |
| Circumferential narrow main groove width/developed tread width | 0.030 | 0.015 | 0.015 | 0.015 | 0.015 |
| Circumferential narrow main groove width/outermost circumferential main groove width | 0.50 | 0.35 | 0.35 | 0.35 | 0.35 |
| Outermost circumferential main groove width/developed tread width | 0.040 | 0.040 | 0.040 | 0.040 | 0.040 |
| Lug groove width/developed tread width | 0.020 | 0.010 | 0.010 | 0.010 | 0.010 |
| Block position | 1.20 | 1.20 | 1.00 | 1.00 | 1.00 |
| Range D including range C | Yes | Poor | Yes | Yes | Yes |
| Directional Pattern | Poor | Yes | Poor | Poor | Poor |
| Inclination of lug grooves (based on V shape) | Poor | Yes | Poor | Poor | Poor |
| Block row misalignment D11/D12 | 2.00 | 2.00 | 2.00 | 2.00 | 2.00 |
| Lug groove arrangement range C1/D1 | 0.40 | 0.40 | 0.70 | 0.70 | 0.70 |
| Aspect ratio | 1.30 | 1.00 | 1.00 | 1.00 | 1.00 |
| Bend point position | 0.30 | 0.5 | 0.5 | 0.5 | 0.5 |
| Tire circumferential direction maximum length of notch portion/tire circumferential direction maximum length of block | 0.080 | 0.080 | 0.080 | 0.080 | 0.080 |
| Tire lateral direction maximum length of notch portion/tire circumferential direction maximum length of block | 0.040 | 0.040 | 0.040 | 0.040 | 0.040 |
| Tire lateral direction length of block/developed tread width | 0.30 | 0.30 | 0.30 | 0.30 | 0.30 |
| Block arrangement pitch length/tire outer circumference length | 0.040 | 0.040 | 0.040 | 0.040 | 0.040 |
| Other land portion width/shoulder land portion width | 0.50 | 0.50 | 0.50 | 0.50 | 0.50 |
| Shoulder land portion width/tread ground contact length | 0.30 | 0.30 | 0.30 | 0.30 | 0.30 |
| Shoulder lug groove depth/circumferential main groove depth | 1.00 | 1.00 | 1.00 | 1.00 | 1.00 |
| Rolling resistance reduction performance | 100 | 110 | 110 | 110 | 110 |
| Traction performance: | 100 | 90 | 100 | 100 | 100 |
| Wear resistance performance | 100 | 95 | 100 | 100 | 100 |
| Pass-by noise performance | Standard | +1 dB | ±0 dB | ±0 dB | ±0 dB |

**[Table 1-2]**

| | Example 4 | Example 5 | Example 6 | Example 7 | Example 8 | Example 9 |
|---|---|---|---|---|---|---|
| Number of circumferential main grooves | 5 | 5 | 5 | 5 | 5 | 5 |
| Block row setting range | 0.65 | 0.63 | 0.63 | 0.63 | 0.63 | 0.63 |
| Circumferential narrow main groove width/developed tread width | 0.015 | 0.007 | 0.024 | 0.010 | 0.020 | 0.015 |
| Circumferential narrow main groove width/outermost circumferential main groove width | 0.35 | 0.35 | 0.35 | 0.35 | 0.35 | 0.15 |
| Outermost circumferential main groove width/developed tread width | 0.040 | 0.040 | 0.040 | 0.040 | 0.040 | 0.040 |
| Lug groove width/developed tread width | 0.010 | 0.010 | 0.010 | 0.010 | 0.010 | 0.010 |
| Block position | 1.00 | 1.00 | 1.00 | 1.00 | 1.00 | 1.00 |
| Range D including range C | Yes | Yes | Yes | Yes | Yes | Yes |
| Directional Pattern | Poor | Poor | Poor | Poor | Poor | Poor |
| Inclination of lug grooves (based on V shape) | Poor | Poor | Poor | Poor | Poor | Poor |
| Block row misalignment D11/D12 | 2.00 | 2.00 | 2.00 | 2.00 | 2.00 | 2.00 |
| Lug groove arrangement range C1/D1 | 0.70 | 0.70 | 0.70 | 0.70 | 0.70 | 0.70 |
| Aspect ratio | 1.00 | 1.00 | 1.00 | 1.00 | 1.00 | 1.00 |
| Bend point position | 0.5 | 0.5 | 0.5 | 0.5 | 0.5 | 0.5 |
| Tire circumferential direction maximum length of notch portion/tire circumferential direction maximum length of block | 0.080 | 0.080 | 0.080 | 0.080 | 0.080 | 0.080 |
| Tire lateral direction maximum length of notch portion/tire circumferential direction maximum length of block | 0.040 | 0.040 | 0.040 | 0.040 | 0.040 | 0.040 |
| Tire lateral direction length of block/developed tread width | 0.30 | 0.30 | 0.30 | 0.30 | 0.30 | 0.30 |
| Block arrangement pitch length/tire outer circumference length | 0.040 | 0.040 | 0.040 | 0.040 | 0.040 | 0.040 |
| Other land portion width/shoulder land portion width | 0.50 | 0.50 | 0.50 | 0.50 | 0.50 | 0.50 |
| Shoulder land portion width/tread ground contact length | 0.30 | 0.30 | 0.30 | 0.30 | 0.30 | 0.30 |
| Shoulder lug groove depth/circumferential main groove depth | 1.00 | 1.00 | 1.00 | 1.00 | 1.00 | 1.00 |
| Rolling resistance reduction performance | 110 | 110 | 110 | 110 | 110 | 110 |
| Traction performance: | 100 | 100 | 100 | 100 | 100 | 100 |
| Wear resistance performance | 100 | 100 | 100 | 100 | 100 | 100 |
| Pass-by noise performance | ±0 dB | ±0 dB | ±0 dB | ±0 dB | ±0 dB | ±0 dB |

**[Table 2-1]**

| | Example 10 | Example 11 | Example 12 | Example 13 | Example 14 | Example 15 |
|---|---|---|---|---|---|---|
| Number of circumferential main grooves | 5 | 5 | 5 | 5 | 5 | 5 |
| Block row setting range | 0.63 | 0.63 | 0.63 | 0.63 | 0.63 | 0.63 |
| Circumferential narrow main groove width/developed tread width | 0.015 | 0.015 | 0.015 | 0.015 | 0.015 | 0.015 |
| Circumferential narrow main groove width/outermost circumferential main groove width | 0.45 | 0.30 | 0.40 | 0.35 | 0.35 | 0.35 |
| Outermost circumferential main groove width/developed tread width | 0.040 | 0.040 | 0.040 | 0.025 | 0.055 | 0.030 |
| Lug groove width/developed tread width | 0.010 | 0.010 | 0.010 | 0.010 | 0.010 | 0.010 |
| Block position | 1.00 | 1.00 | 1.00 | 1.00 | 1.00 | 1.00 |
| Range D including range C | Yes | Yes | Yes | Yes | Yes | Yes |
| Directional Pattern | Poor | Poor | Poor | Poor | Poor | Poor |
| Inclination of lug grooves (based on V shape) | Poor | Poor | Poor | Poor | Poor | Poor |
| Block row misalignment D11/D12 | 2.00 | 2.00 | 2.00 | 2.00 | 2.00 | 2.00 |
| Lug groove arrangement range C1/D1 | 0.70 | 0.70 | 0.70 | 0.70 | 0.70 | 0.70 |
| Aspect ratio | 1.00 | 1.00 | 1.00 | 1.00 | 1.00 | 1.00 |
| Bend point position | 0.5 | 0.5 | 0.5 | 0.5 | 0.5 | 0.5 |
| Tire circumferential direction maximum length of notch portion/tire circumferential direction maximum length of block | 0.080 | 0.080 | 0.080 | 0.080 | 0.080 | 0.080 |
| Tire lateral direction maximum length of notch portion/tire circumferential direction maximum length of block | 0.040 | 0.040 | 0.040 | 0.040 | 0.040 | 0.040 |
| Tire lateral direction length of block/developed tread width | 0.30 | 0.30 | 0.30 | 0.30 | 0.30 | 0.30 |
| Block arrangement pitch length/tire outer circumference length | 0.040 | 0.040 | 0.040 | 0.040 | 0.040 | 0.040 |
| Other land portion width/shoulder land portion width | 0.50 | 0.50 | 0.50 | 0.50 | 0.50 | 0.50 |
| Shoulder land portion width/tread ground contact length | 0.30 | 0.30 | 0.30 | 0.30 | 0.30 | 0.30 |
| Shoulder lug groove depth/circumferential main groove depth | 1.00 | 1.00 | 1.00 | 1.00 | 1.00 | 1.00 |
| Rolling resistance reduction performance | 110 | 110 | 110 | 110 | 110 | 110 |
| Traction performance: | 100 | 100 | 100 | 100 | 100 | 100 |
| Wear resistance performance | 100 | 100 | 100 | 100 | 100 | 100 |
| Pass-by noise performance | ±0 dB | ±0 dB | ±0 dB | ±0 dB | ±0 dB | ±0 dB |

**[Table 2-2]**

| | Example 16 | Example 17 | Example 18 | Example 19 | Example 20 | Example 21 | Example 22 |
|---|---|---|---|---|---|---|---|
| Number of circumferential main grooves | 5 | 5 | 5 | 5 | 5 | 5 | 5 |
| Block row setting range | 0.63 | 0.63 | 0.63 | 0.63 | 0.63 | 0.63 | 0.63 |
| Circumferential narrow main groove width/developed tread width | 0.015 | 0.015 | 0.015 | 0.015 | 0.015 | 0.015 | 0.015 |
| Circumferential narrow main groove width/outermost circumferential main groove width | 0.35 | 0.35 | 0.35 | 0.35 | 0.35 | 0.35 | 0.35 |
| Outermost circumferential main groove width/developed tread width | 0.050 | 0.040 | 0.040 | 0.040 | 0.040 | 0.040 | 0.040 |
| Lug groove width/developed tread width | 0.010 | 0.003 | 0.016 | 0.007 | 0.012 | 0.010 | 0.010 |
| Block position | 1.00 | 1.00 | 1.00 | 1.00 | 1.00 | 0.90 | 1.10 |
| Range D including range C | Yes | Yes | Yes | Yes | Yes | Yes | Yes |
| Directional Pattern | Poor | Poor | Poor | Poor | Poor | Poor | Poor |
| Inclination of lug grooves (based on V shape) | Poor | Poor | Poor | Poor | Poor | Poor | Poor |
| Block row misalignment D11/D12 | 2.00 | 2.00 | 2.00 | 2.00 | 2.00 | 2.00 | 2.00 |
| Lug groove arrangement range C1/D1 | 0.70 | 0.70 | 0.70 | 0.70 | 0.70 | 0.70 | 0.70 |
| Aspect ratio | 1.00 | 1.00 | 1.00 | 1.00 | 1.00 | 1.00 | 1.00 |
| Bend point position | 0.5 | 0.5 | 0.5 | 0.5 | 0.5 | 0.5 | 0.5 |
| Tire circumferential direction maximum length of notch portion/tire circumferential direction maximum length of block | 0.080 | 0.080 | 0.080 | 0.080 | 0.080 | 0.080 | 0.080 |
| Tire lateral direction maximum length of notch portion/tire circumferential direction maximum length of block | 0.040 | 0.040 | 0.040 | 0.040 | 0.040 | 0.040 | 0.040 |
| Tire lateral direction length of block/developed tread width | 0.30 | 0.30 | 0.30 | 0.30 | 0.30 | 0.30 | 0.30 |
| Block arrangement pitch length/tire outer circumference length | 0.040 | 0.040 | 0.040 | 0.040 | 0.040 | 0.040 | 0.040 |
| Other land portion width/shoulder land portion width | 0.50 | 0.50 | 0.50 | 0.50 | 0.50 | 0.50 | 0.50 |
| Shoulder land portion width/tread ground contact length | 0.30 | 0.30 | 0.30 | 0.30 | 0.30 | 0.30 | 0.30 |
| Shoulder lug groove depth/circumferential main groove depth | 1.00 | 1.00 | 1.00 | 1.00 | 1.00 | 1.00 | 1.00 |
| Rolling resistance reduction performance | 110 | 110 | 110 | 110 | 110 | 110 | 110 |
| Traction performance: | 100 | 100 | 100 | 100 | 100 | 100 | 100 |
| Wear resistance performance | 100 | 100 | 100 | 100 | 100 | 100 | 100 |
| Pass-by noise performance | ±0 dB | ±0 dB | ±0 dB | ±0 dB | ±0 dB | ±0 dB | ±0 dB |

**[Table 3-1]**

| | Comparative Example 3 | Example 23 | Example 24 | Example 25 | Example 26 | Example 27 |
|---|---|---|---|---|---|---|
| Number of circumferential main grooves | 5 | 5 | 5 | 5 | 5 | 5 |
| Block row setting range | 0.50 | 0.63 | 0.63 | 0.63 | 0.63 | 0.63 |
| Circumferential narrow main groove width/developed tread width | 0.015 | 0.015 | 0.015 | 0.015 | 0.015 | 0.015 |
| Circumferential narrow main groove width/outermost circumferential main groove width | 0.35 | 0.35 | 0.35 | 0.35 | 0.35 | 0.35 |
| Outermost circumferential main groove width/developed tread width | 0.040 | 0.040 | 0.040 | 0.040 | 0.040 | 0.040 |
| Lug groove width/developed tread width | 0.010 | 0.010 | 0.010 | 0.010 | 0.010 | 0.010 |
| Block position | 1.20 | 1.00 | 1.00 | 1.00 | 1.00 | 1.00 |
| Range D including range C | Yes | Yes | Yes | Yes | Yes | Yes |
| Directional Pattern | Yes | Yes | Yes | Yes | Yes | Yes |
| Inclination of lug grooves (based on V shape) | Poor | Yes | Yes | Yes | Yes | Yes |
| Block row misalignment D11/D12 | 2.00 | 2.00 | 0.65 | 1.65 | 1.00 | 1.00 |
| Lug groove arrangement range C1/D1 | 0.40 | 0.70 | 0.70 | 0.70 | 0.20 | 0.60 |
| Aspect ratio | 1.30 | 1.00 | 1.00 | 1.00 | 1.00 | 1.00 |
| Bend point position | 0.30 | 0.5 | 0.5 | 0.5 | 0.5 | 0.5 |
| Tire circumferential direction maximum length of notch portion/tire circumferential direction maximum length of block | 0.080 | 0.080 | 0.080 | 0.080 | 0.080 | 0.080 |
| Tire lateral direction maximum length of notch portion/tire circumferential direction maximum length of block | 0.040 | 0.040 | 0.040 | 0.040 | 0.040 | 0.040 |
| Tire lateral direction length of block/developed tread width | 0.30 | 0.30 | 0.30 | 0.30 | 0.30 | 0.30 |
| Block arrangement pitch length/tire outer circumference length | 0.040 | 0.040 | 0.040 | 0.040 | 0.040 | 0.040 |
| Other land portion width/shoulder land portion width | 0.50 | 0.50 | 0.50 | 0.50 | 0.50 | 0.50 |
| Shoulder land portion width/tread ground contact length | 0.30 | 0.30 | 0.30 | 0.30 | 0.30 | 0.30 |
| Shoulder lug groove depth/circumferential main groove depth | 1.00 | 1.00 | 1.00 | 1.00 | 1.00 | 1.00 |
| Rolling resistance reduction performance | 110 | 110 | 110 | 110 | 115 | 115 |
| Traction performance | 90 | 105 | 105 | 105 | 110 | 110 |
| Wear resistance performance | 95 | 100 | 100 | 100 | 105 | 105 |
| Pass-by noise performance | +1 dB | -1 dB | -1 dB | -1 dB | -2 dB | -2 dB |

**[Table 3-2]**

| | Example 28 | Example 29 | Example 30 | Example 31 | Example 32 | Example 33 |
|---|---|---|---|---|---|---|
| Number of circumferential main grooves | 5 | 5 | 5 | 5 | 5 | 5 |
| Block row setting range | 0.63 | 0.63 | 0.63 | 0.63 | 0.63 | 0.63 |
| Circumferential narrow main groove width/developed tread width | 0.015 | 0.015 | 0.015 | 0.015 | 0.015 | 0.015 |
| Circumferential narrow main groove width/outermost circumferential main groove width | 0.35 | 0.35 | 0.35 | 0.35 | 0.35 | 0.35 |
| Outermost circumferential main groove width/developed tread width | 0.040 | 0.040 | 0.040 | 0.040 | 0.040 | 0.040 |
| Lug groove width/developed tread width | 0.010 | 0.010 | 0.010 | 0.010 | 0.010 | 0.010 |
| Block position | 1.00 | 1.00 | 1.00 | 1.00 | 1.00 | 1.00 |
| Range D including range C | Yes | Yes | Yes | Yes | Yes | Yes |
| Directional Pattern | Yes | Yes | Yes | Yes | Yes | Yes |
| Inclination of lug grooves (based on V shape) | Yes | Yes | Yes | Yes | Yes | Yes |
| Block row misalignment D11/D12 | 1.00 | 1.00 | 1.00 | 1.00 | 1.00 | 1.00 |
| Lug groove arrangement range C1/D1 | 0.40 | 0.40 | 0.40 | 0.40 | 0.40 | 0.40 |
| Aspect ratio | 1.05 | 1.65 | 1.15 | 1.50 | 1.30 | 1.30 |
| Bend point position | 0.5 | 0.5 | 0.5 | 0.5 | 0.1 | 0.4 |
| Tire circumferential direction maximum length of notch portion/tire circumferential direction maximum length of block | 0.080 | 0.080 | 0.080 | 0.080 | 0.080 | 0.080 |
| Tire lateral direction maximum length of notch portion/tire circumferential direction maximum length of block | 0.040 | 0.040 | 0.040 | 0.040 | 0.040 | 0.040 |
| Tire lateral direction length of block/developed tread width | 0.30 | 0.30 | 0.30 | 0.30 | 0.30 | 0.30 |
| Block arrangement pitch length/tire outer circumference length | 0.040 | 0.040 | 0.040 | 0.040 | 0.040 | 0.040 |
| Other land portion width/shoulder land portion width | 0.50 | 0.50 | 0.50 | 0.50 | 0.50 | 0.50 |
| Shoulder land portion width/tread ground contact length | 0.30 | 0.30 | 0.30 | 0.30 | 0.30 | 0.30 |
| Shoulder lug groove depth/circumferential main groove depth | 1.00 | 1.00 | 1.00 | 1.00 | 1.00 | 1.00 |
| Rolling resistance reduction performance | 120 | 120 | 120 | 120 | 125 | 125 |
| Traction performance | 110 | 110 | 110 | 110 | 115 | 115 |
| Wear resistance performance | 110 | 110 | 110 | 110 | 110 | 110 |
| Pass-by noise performance | -2 dB | -2 dB | -2 dB | -2 dB | -2 dB | -2 dB |

**[Table 4-1]**

| | Example 34 | Example 35 | Example 36 | Example 37 |
|---|---|---|---|---|
| Number of circumferential main grooves | 5 | 5 | 5 | 5 |
| Block row setting range | 0.63 | 0.63 | 0.63 | 0.63 |
| Circumferential narrow main groove width/developed tread width | 0.015 | 0.015 | 0.015 | 0.015 |
| Circumferential narrow main groove width/outermost circumferential main groove width | 0.35 | 0.35 | 0.35 | 0.35 |
| Outermost circumferential main groove width/developed tread width | 0.040 | 0.040 | 0.040 | 0.040 |
| Lug groove width/developed tread width | 0.010 | 0.010 | 0.010 | 0.010 |
| Block position | 1.00 | 1.00 | 1.00 | 1.00 |
| Range D including range C | Yes | Yes | Yes | Yes |
| Directional Pattern | Yes | Yes | Yes | Yes |
| Inclination of lug grooves (based on V shape) | Yes | Yes | Yes | Yes |
| Block row misalignment D11/D12 | 1.00 | 1.00 | 1.00 | 1.00 |
| Lug groove arrangement range C1/D1 | 0.40 | 0.40 | 0.40 | 0.40 |
| Aspect ratio | 1.30 | 1.30 | 1.30 | 1.30 |
| Bend point position | 0.3 | 0.3 | 0.3 | 0.3 |
| Tire circumferential direction maximum length of notch portion/tire circumferential direction maximum length of block | 0.015 | 0.070 | 0.030 | 0.055 |
| Tire lateral direction maximum length of notch portion/tire circumferential direction maximum length of block | 0.022 | 0.022 | 0.022 | 0.022 |
| Tire lateral direction length of block/developed tread width | 0.30 | 0.30 | 0.30 | 0.30 |
| Block arrangement pitch length/tire outer circumference length | 0.040 | 0.040 | 0.040 | 0.040 |
| Other land portion width/shoulder land portion width | 0.50 | 0.50 | 0.50 | 0.50 |
| Shoulder land portion width/tread ground contact length | 0.30 | 0.30 | 0.30 | 0.30 |
| Shoulder lug groove depth/circumferential main groove depth | 1.00 | 1.00 | 1.00 | 1.00 |
| Rolling resistance reduction performance | 125 | 125 | 125 | 125 |
| Traction performance | 115 | 115 | 115 | 115 |
| Wear resistance performance | 115 | 115 | 115 | 115 |
| Pass-by noise performance | -2 dB | -2 dB | -2 dB | -2 dB |

**[Table 4-2]**

| | Example 38 | Example 39 | Example 40 | Example 41 | Example 42 |
|---|---|---|---|---|---|
| Number of circumferential main grooves | 5 | 5 | 5 | 5 | 5 |
| Block row setting range | 0.63 | 0.63 | 0.63 | 0.63 | 0.63 |
| Circumferential narrow main groove width/developed tread width | 0.015 | 0.015 | 0.015 | 0.015 | 0.015 |
| Circumferential narrow main groove width/outermost circumferential main groove width | 0.35 | 0.35 | 0.35 | 0.35 | 0.35 |
| Outermost circumferential main groove width/developed tread width | 0.040 | 0.040 | 0.040 | 0.040 | 0.040 |
| Lug groove width/developed tread width | 0.010 | 0.010 | 0.010 | 0.010 | 0.010 |
| Block position | 1.00 | 1.00 | 1.00 | 1.00 | 1.00 |
| Range D including range C | Yes | Yes | Yes | Yes | Yes |
| Directional Pattern | Yes | Yes | Yes | Yes | Yes |
| Inclination of lug grooves (based on V shape) | Yes | Yes | Yes | Yes | Yes |
| Block row misalignment D11/D12 | 1.00 | 1.00 | 1.00 | 1.00 | 1.00 |
| Lug groove arrangement range C1/D1 | 0.40 | 0.40 | 0.40 | 0.40 | 0.40 |
| Aspect ratio | 1.30 | 1.30 | 1.30 | 1.30 | 1.30 |
| Bend point position | 0.3 | 0.3 | 0.3 | 0.3 | 0.3 |
| Tire circumferential direction maximum length of notch portion/tire circumferential direction maximum length of block | 0.040 | 0.040 | 0.040 | 0.040 | 0.040 |
| Tire lateral direction maximum length of notch portion/tire circumferential direction maximum length of block | 0.007 | 0.035 | 0.015 | 0.028 | 0.022 |
| Tire lateral direction length of block/developed tread width | 0.30 | 0.30 | 0.30 | 0.30 | 0.15 |
| Block arrangement pitch length/tire outer circumference length | 0.040 | 0.040 | 0.040 | 0.040 | 0.040 |
| Other land portion width/shoulder land portion width | 0.50 | 0.50 | 0.50 | 0.50 | 0.50 |
| Shoulder land portion width/tread ground contact length | 0.30 | 0.30 | 0.30 | 0.30 | 0.30 |
| Shoulder lug groove depth/circumferential main groove depth | 1.00 | 1.00 | 1.00 | 1.00 | 1.00 |
| Rolling resistance reduction performance | 125 | 125 | 125 | 125 | 125 |
| Traction performance | 115 | 115 | 115 | 115 | 115 |
| Wear resistance performance | 115 | 115 | 115 | 115 | 115 |
| Pass-by noise performance | -2 dB | -2 dB | -2 dB | -2 dB | -2 dB |

**[Table 5-1]**

| | Example 43 | Example 44 | Example 45 | Example 46 |
|---|---|---|---|---|
| Number of circumferential main grooves | 5 | 5 | 5 | 5 |
| Block row setting range | 0.63 | 0.63 | 0.63 | 0.63 |
| Circumferential narrow main groove width/developed tread width | 0.015 | 0.015 | 0.015 | 0.015 |
| Circumferential narrow main groove width/outermost circumferential main groove width | 0.35 | 0.35 | 0.35 | 0.35 |
| Outermost circumferential main groove width/developed tread width | 0.040 | 0.040 | 0.040 | 0.040 |
| Lug groove width/developed tread width | 0.010 | 0.010 | 0.010 | 0.010 |
| Block position | 1.00 | 1.00 | 1.00 | 1.00 |
| Range D including range C | Yes | Yes | Yes | Yes |
| Directional Pattern | Yes | Yes | Yes | Yes |
| Inclination of lug grooves (based on V shape) | Yes | Yes | Yes | Yes |
| Block row misalignment D11/D12 | 1.00 | 1.00 | 1.00 | 1.00 |
| Lug groove arrangement range C1/D1 | 0.40 | 0.40 | 0.40 | 0.40 |
| Aspect ratio | 1.30 | 1.30 | 1.30 | 1.30 |
| Bend point position | 0.3 | 0.3 | 0.3 | 0.3 |
| Tire circumferential direction maximum length of notch portion/tire circumferential direction maximum length of block | 0.040 | 0.040 | 0.040 | 0.040 |
| Tire lateral direction maximum length of notch portion/tire circumferential direction maximum length of block | 0.022 | 0.022 | 0.022 | 0.022 |
| Tire lateral direction length of block/developed tread width | 0.20 | 0.17 | 0.17 | 0.17 |
| Block arrangement pitch length/tire outer circumference length | 0.040 | 0.010 | 0.030 | 0.020 |
| Other land portion width/shoulder land portion width | 0.50 | 0.50 | 0.50 | 0.70 |
| Shoulder land portion width/tread ground contact length | 0.30 | 0.30 | 0.30 | 0.30 |
| Shoulder lug groove depth/circumferential main groove depth | 1.00 | 1.00 | 1.00 | 1.00 |
| Rolling resistance reduction performance | 125 | 125 | 125 | 125 |
| Traction performance | 115 | 115 | 115 | 115 |
| Wear resistance performance | 115 | 115 | 115 | 115 |
| Pass-by noise performance | -2 dB | -2 dB | -2 dB | -2 dB |

**[Table 5-2]**

| | Example 47 | Example 48 | Example 49 | Example 50 | Example 51 |
|---|---|---|---|---|---|
| Number of circumferential main grooves | 5 | 5 | 5 | 5 | 5 |
| Block row setting range | 0.63 | 0.63 | 0.63 | 0.63 | 0.63 |
| Circumferential narrow main groove width/developed tread width | 0.015 | 0.015 | 0.015 | 0.015 | 0.015 |
| Circumferential narrow main groove width/outermost circumferential main groove width | 0.35 | 0.35 | 0.35 | 0.35 | 0.35 |
| Outermost circumferential main groove width/developed tread width | 0.040 | 0.040 | 0.040 | 0.040 | 0.040 |
| Lug groove width/developed tread width | 0.010 | 0.010 | 0.010 | 0.010 | 0.010 |
| Block position | 1.00 | 1.00 | 1.00 | 1.00 | 1.00 |
| Range D including range C | Yes | Yes | Yes | Yes | Yes |
| Directional Pattern | Yes | Yes | Yes | Yes | Yes |
| Inclination of lug grooves (based on V shape) | Yes | Yes | Yes | Yes | Yes |
| Block row misalignment D11/D12 | 1.00 | 1.00 | 1.00 | 1.00 | 1.00 |
| Lug groove arrangement range C1/D1 | 0.40 | 0.40 | 0.40 | 0.40 | 0.40 |
| Aspect ratio | 1.30 | 1.30 | 1.30 | 1.30 | 1.30 |
| Bend point position | 0.3 | 0.3 | 0.3 | 0.3 | 0.3 |
| Tire circumferential direction maximum length of notch portion/tire circumferential direction maximum length of block | 0.040 | 0.040 | 0.040 | 0.040 | 0.040 |
| Tire lateral direction maximum length of notch portion/tire circumferential direction maximum length of block | 0.022 | 0.022 | 0.022 | 0.022 | 0.022 |
| Tire lateral direction length of block/developed tread width | 0.17 | 0.17 | 0.17 | 0.17 | 0.17 |
| Block arrangement pitch length/tire outer circumference length | 0.020 | 0.020 | 0.020 | 0.020 | 0.020 |
| Other land portion width/shoulder land portion width | 1.00 | 0.85 | 0.85 | 0.85 | 0.85 |
| Shoulder land portion width/tread ground contact length | 0.30 | 0.20 | 0.10 | 0.10 | 0.10 |
| Shoulder lug groove depth/circumferential main groove depth | 1.00 | 1.00 | 0.03 | 0.5 | 0.3 |
| Rolling resistance reduction performance | 125 | 125 | 125 | 125 | 125 |
| Traction performance | 115 | 115 | 115 | 115 | 115 |
| Wear resistance performance | 120 | 120 | 120 | 120 | 120 |
| Pass-by noise performance | -2 dB | -2 dB | -2 dB | -2 dB | -2 dB |

### Reference Signs List

1 Pneumatic tire
11 Bead core
13 Carcass layer
14 Belt layer
15 Tread rubber
16 Sidewall rubber
17 Rim cushion rubber
20, 20A, 20B, 20C Tread portion
21 First circumferential main groove
22 Second circumferential main grooves
23 Third circumferential main grooves
24, 24A Lug groove
24D, 24E Rounded portion
25A, 25B Shoulder lug groove
26 Notch portion
31 First land portion
31B, 32B, 33B Block
32 Second land portion
33 Third land portion
141 Large-angle belt
142, 143 Cross belt ply
144 Belt cover
CL Tire equatorial plane
K1, K2 Bend point
MB1, MB2 Midpoint position
PB arrangement pitch length
TDW Developed tread width

## Claims

1. A pneumatic tire (1) comprising:
five or more circumferential main grooves (21, 22, 23) extending in a tire circumferential direction; and
a plurality of land portions (31, 32) defined by the circumferential main grooves (21, 22, 23), the plurality of land portions comprising blocks (31B, 32B) separated from one another by lug grooves (24) and arranged side by side in the tire circumferential direction;
a ratio of a tire lateral direction length (WH) of an arrangement range of the blocks (31B, 32B) to a developed tread width (TDW) being not less than 0.55 and not more than 0.70;
a ratio of a groove width (W1, W2) of the circumferential main grooves (21, 22), other than outermost circumferential main grooves (23) adjacent to tire lateral direction outermost land portions (32) of the plurality of land portions, to the developed tread width (TDW) being not less than 0.007 and not more than 0.024 and to a groove width (W3) of the outermost circumferential main grooves (23) being not less than 0.15 and not more than 0.45;
a ratio of a groove width (W3) of the outermost circumferential main grooves (23) to the developed tread width (TDW) being not less than 0.025 and not more than 0.055;
a ratio of a groove width of each of the lug grooves (24) to the developed tread width (TDW) being not less than 0.003 and not more than 0.016; and for a set of the land portions (31) opposite each other across the tire equatorial plane (CL), a range (C1, C2) taken up in the tire circumferential direction by each of the lug grooves (24) in one of the land portions (31) being included in a range (D1, D2) taken up in the tire circumferential direction by the corresponding block (31B) in the other land portion (31), wherein for sets of the land portions (31, 32) opposite each other across a tire equatorial plane (CL), in each of the sets of the land portions (31, 32), positions of blocks (31B, 32B) adjacent in the tire lateral direction are the same in the tire circumferential direction,
the pneumatic tire (1) further comprising shoulder lug grooves (25A, 25B) formed in each of the shoulder land portions (33) and extending in the tire lateral direction,
**characterized in that**
a ratio of a groove depth (DLo) of each of the shoulder lug grooves (25A, 25B) to a groove depth (GD) of each of the circumferential main grooves (23) is not less than 0.03 and not more than 0.5, and
the shoulder lug grooves (25A, 25B) include first shoulder lug grooves (25A) and second shoulder lug grooves (25B) having different groove widths, and the first shoulder lug grooves (25A) and the second shoulder lug grooves (25B) are disposed in the shoulder land portions (33) alternately in the tire circumferential direction.

2. The pneumatic tire according to claim 1, wherein
for all of the lug grooves (24), a tire lateral direction inner end portion is biased toward one side in a tire rotation direction compared to a tire lateral direction outer end portion.

3. The pneumatic tire according to claim 1 or 2, wherein
for the set of the land portions (31) opposite each other across the tire equatorial plane (CL), assuming that D11 and D12 denote distances from a tire circumferential direction center line of the range taken up in the tire circumferential direction by each of the lug grooves (24) in one of the land portions (31) to end portions of the range taken up in the tire circumferential direction by the corresponding block (31B) in the other land portion (31), 0.65 ≤ D11/D12 ≤ 1.65.

4. The pneumatic tire according to any one of claims 1 to 3, wherein
for the same land portion of the plurality of land portions (31, 32),
a ratio of a tire circumferential direction length (LC1) of the lug groove (24) to a tire circumferential direction length (LD1) of the block (31B, 32B) is not less than 0.2 and not more than 0.6.

5. The pneumatic tire according to any one of claims 1 to 4, wherein
an aspect ratio of each of the blocks (31B, 32B) forming the land portion (31, 32) is not less than 1.05 and not more than 1.65.

6. The pneumatic tire according to any one of claims 1 to 5, wherein
the lug groove (24) comprises at least one bend point (K1, K2), and
a ratio of a length (LK1), from a tire circumferential direction end portion of the block (32B) to the bend point (K1) along the tire circumferential direction, to the tire circumferential direction length (LB) of the block (32B) is not less than 0.1 and not more than 0.4.

7. The pneumatic tire according to any one of claims 1 to 6, further comprising
a notch portion (26) formed on at least one side of each of the blocks (31B, 32B), the side facing the corresponding circumferential main groove (21, 22, 23), wherein
a ratio of a tire circumferential direction maximum length (L26) of the notch portion (26) to the tire circumferential direction maximum length (LB) of the block is not less than 0.015 and not more than 0.070, and
a ratio of a tire lateral direction maximum length (W26) of the notch portion (26) to a tire lateral direction maximum length (E) of the block (31B, 32B) is not less than 0.007 and not more than 0.035.

8. The pneumatic tire according to any one of claims 1 to 7, wherein
a ratio of a tire lateral direction length (E) of the block (31B, 32B) to the developed tread (TDW) width is not less than 0.15 and not more than 0.2.

9. The pneumatic tire according to any one of claims 1 to 8, wherein
a ratio of an arrangement pitch length (PB) of the blocks (31B, 32B) in the tire circumferential direction to a tire outer circumference length along the tire circumferential direction is not less than 0.010 and not more than 0.030.

10. The pneumatic tire according to any one of claims 1 to 9, further comprising
shoulder land portions (33) provided outward of the outermost circumferential main grooves (23) in a tire lateral direction, wherein a ratio of a tire lateral direction length (Wa1, Wa2) of each of the land portions (31, 32) other than the shoulder land portions (33) to a tire lateral direction length (Wb) of each of the shoulder land portions (33) is not less than 0.70 and not more than 1.00.

11. The pneumatic tire according to claim 10, wherein
a ratio of the tire lateral direction length (Wb) of the shoulder land portion (33) to a tire circumferential direction length (TL) of a ground contact surface of a tread portion (20) is not more than 0.20.

## Patentansprüche

1. Luftreifen (1), umfassend:
fünf oder mehr Hauptumfangsrillen (21, 22, 23), die sich in eine Reifenumfangsrichtung erstrecken; und
eine Mehrzahl von Stegabschnitten (31, 32), die durch die Hauptumfangsrillen (21, 22, 23) definiert ist, die Mehrzahl von Stegabschnitten umfassend Blöcke (31B, 32B), die durch Stollenrillen (24) voneinander getrennt und nebeneinander in der Reifenumfangsrichtung angeordnet sind;
wobei ein Verhältnis einer Reifenquerrichtungslänge (WH) eines Anordnungsbereichs der Blöcke (31B, 32B) zu einer gestreckten Laufflächenbreite (TDW) nicht weniger als 0,55 und nicht mehr als 0,70 beträgt;
wobei ein Verhältnis einer Rillenbreite (W1, W2) der Hauptumfangsrillen (21, 22), außer äußersten Hauptumfangsrillen (23) angrenzend an äußerste Stegabschnitte (32) einer Reifenquerrichtung der Mehrzahl von Stegabschnitten, zu der gestreckten Laufflächenbreite (TDW) nicht weniger als 0,007 und nicht mehr als 0,024 beträgt und zu einer Rillenbreite (W3) der äußersten Hauptumfangsrillen (23) nicht weniger als 0,15 und nicht mehr als 0,45 beträgt;
wobei ein Verhältnis einer Rillenbreite (W3) der äußersten Hauptumfangsrillen (23) zu der gestreckten Laufflächenbreite (TDW) nicht weniger als 0,025 und nicht mehr als 0,055 beträgt;
wobei ein Verhältnis einer Rillenbreite jeder der Stollenrillen (24) zu der gestreckten Laufflächenbreite (TDW) nicht weniger als 0,003 und nicht mehr als 0,016 beträgt; und für einen Satz der Stegabschnitte (31), die über die Äquatorialebene des Reifens (CL) einander gegenüberliegen, ein Bereich (C1, C2), der in der Reifenumfangsrichtung durch jede der Stollenrillen (24) in einem der Stegabschnitte (31) eingenommen wird, in einem Bereich (D1, D2), der in der Reifenumfangsrichtung durch den entsprechenden Block (31B) in dem anderen Stegabschnitt (31) eingenommen wird, eingeschlossen ist, wobei für Sätze der Stegabschnitte (31, 32), die über eine Äquatorialebene des Reifens (CL) einander gegenüberliegen, in jedem der Sätze der Stegabschnitte (31, 32), Stellungen von Blöcken (31B, 32B) angrenzend in der Reifenquerrichtung in der Reifenumfangsrichtung gleich sind,
der Luftreifen (1) ferner umfassend Schulterstollenrillen (25A, 25B), die in jedem der Schulterstegabschnitte (33) ausgebildet sind und sich in der Reifenquerrichtung erstrecken,
**dadurch gekennzeichnet, dass**
ein Verhältnis einer Rillentiefe (DLo) jeder der Schulterstollenrillen (25A, 25B) zu einer Rillentiefe (GD) jeder der Hauptumfangsrillen (23) nicht weniger als 0,03 und nicht mehr als 0,5 beträgt und
die Schulterstollenrillen (25A, 25B) erste Schulterstollenrillen (25A) und zweite Schulterstollenrillen (25B), die unterschiedliche Rillenbreiten aufweisen, einschließen und die ersten Schulterstollenrillen (25A) und die zweiten Schulterstollenrillen (25B) in den Schulterstegabschnitten (33) in der Reifenumfangsrichtung abwechselnd eingerichtet sind.

2. Luftreifen gemäß Anspruch 1, wobei
für alle der Stollenrillen (24), ein Innenendabschnitt der Reifenquerrichtung im Vergleich zu einem Außenendabschnitt der Reifenquerrichtung zu einer Seite hin in einer Reifendrehrichtung vorgespannt ist.

3. Luftreifen gemäß Anspruch 1 oder 2, wobei
für den Satz der Stegabschnitte (31), die über die Äquatorialebene des Reifens (CL) einander gegenüberliegen, angenommen, dass D11 und D12 Abstände von einer Mittellinie der Reifenumfangsrichtung des Bereichs, der in der Reifenumfangsrichtung durch jede der Stollenrillen (24) in einem der Stegabschnitte (31) eingenommen wird, zu Endabschnitten des Bereichs, der in der Reifenumfangsrichtung durch den entsprechenden Block (31B) in dem anderen Stegabschnitt (31) eingenommen wird, bezeichnen, 0,65 ≤ D11/D12 ≤ 1,65.

4. Luftreifen gemäß einem der Ansprüche 1 bis 3, wobei für den gleichen Stegabschnitt der Mehrzahl von Stegabschnitten (31, 32) ein Verhältnis einer Reifenumfangsrichtungslänge (LC1) der Stollenrille (24) zu einer Reifenumfangsrichtungslänge (LD1) des Blocks (31B, 32B) nicht weniger als 0,2 und nicht mehr als 0,6 beträgt.

5. Luftreifen gemäß einem der Ansprüche 1 bis 4, wobei ein Querschnittsverhältnis jedes der Blöcke (31B, 32B), die den Stegabschnitt (31, 32) ausbilden, nicht weniger als 1,05 und nicht mehr als 1,65 beträgt.

6. Luftreifen gemäß einem der Ansprüche 1 bis 5, wobei die Stollenrille (24) mindestens einen Biegepunkt (K1, K2) umfasst und ein Verhältnis einer Länge (LK1), von einem Endabschnitt der Reifenumfangsrichtung des Blocks (32B) zu dem Biegepunkt (K1) entlang der Reifenumfangsrichtung, zu der Reifenumfangsrichtungslänge (LB) des Blocks (32B) nicht weniger als 0,1 und nicht mehr als 0,4 beträgt.

7. Luftreifen gemäß einem der Ansprüche 1 bis 6, ferner umfassend
einen Aussparungsabschnitt (26), der an mindestens einer Seite jedes der Blöcke (31B, 32B) ausgebildet ist, wobei die Seite der entsprechenden Hauptumfangsrille (21, 22, 23) zugewandt ist, wobei
ein Verhältnis einer Reifenumfangsrichtungsmaximallänge (L26) des Aussparungsabschnitts (26) zu der Reifenumfangsrichtungsmaximallänge (LB) des Blocks nicht weniger als 0,015 und nicht mehr als 0,070 beträgt und ein Verhältnis einer Reifenquerrichtungsmaximallänge (W26) des Aussparungsabschnitts (26) zu einer Reifenquerrichtungsmaximallänge (E) des Blocks (31B, 32B) nicht weniger als 0,007 und nicht mehr als 0,035 beträgt.

8. Luftreifen gemäß einem der Ansprüche 1 bis 7, wobei ein Verhältnis einer Reifenquerrichtungslänge (E) des Blocks (31B, 32B) zu der gestreckten Laufflächenbreite (TDW-Breite) nicht weniger als 0,15 und nicht mehr als 0,2 beträgt.

9. Luftreifen gemäß einem der Ansprüche 1 bis 8, wobei
ein Verhältnis einer Anordnungsteilungsabstandslänge (PB) der Blöcke (31B, 32B) in der Reifenumfangsrichtung zu einer Reifenaußenumfangslänge entlang der Reifenumfangsrichtung nicht weniger als 0,010 und nicht mehr als 0,030 beträgt.

10. Luftreifen gemäß einem der Ansprüche 1 bis 9, ferner umfassend
Schulterstegabschnitte (33), die außerhalb der äußersten Hauptumfangsrillen (23) in einer Reifenquerrichtung bereitgestellt sind, wobei ein Verhältnis einer Reifenquerrichtungslänge (Wa1, Wa2) jedes der Stegabschnitte (31, 32), außer den Schulterstegabschnitten (33), zu einer Reifenquerrichtungslänge (Wb) jedes der Schulterstegabschnitte (33) nicht weniger als 0,70 und nicht mehr als 1,00 beträgt.

11. Luftreifen gemäß Anspruch 10, wobei ein Verhältnis der Reifenquerrichtungslänge (Wb) des Schulterstegabschnitts (33) zu einer Reifenumfangsrichtungslänge (TL) einer Bodenkontaktoberfläche eines Laufflächenabschnitts (20) nicht mehr als 0,20 beträgt.

## Revendications

1. Pneumatique (1) comprenant :
au moins cinq rainures principales circonférentielles (21, 22, 23, 24) s'étendant dans une direction circonférentielle de pneu ; et
une pluralité de parties d'appui (31, 32) définies par les rainures principales circonférentielles (21, 22, 23), la pluralité de parties en relief comprenant des blocs (31B, 32B) séparés les uns des autres par des rainures de barrette (24) et agencés côte à côte dans la direction circonférentielle de pneu ;
un rapport d'une longueur de direction latérale de pneu (WH) d'une plage d'agencement des blocs (31B, 32B) à une largeur de bande de roulement développée (TDW) n'étant pas inférieur à 0,55 et pas supérieur à 0,70 ;
un rapport d'une largeur de rainure (W1, W2) des rainures principales circonférentielles (21, 22), autres que les rainures principales circonférentielles extérieures (23) adjacentes aux parties d'appui à direction latérale de pneu (32) de la pluralité de parties d'appui, à la largeur de bande de roulement (TDW) développée n'étant pas inférieur à 0,007 et pas supérieur à 0,024 et à une largeur de rainure (W3) des rainures principales circonférentielles externes (23) n'étant pas inférieur à 0,15 et pas supérieur à 0,45 ;
un rapport d'une largeur de rainure (W3) des rainures principales circonférentielles (23) extérieures à la largeur de bande de roulement (TDW) développée n'étant pas inférieur à 0,025 et pas supérieur à 0,055 ;
un rapport d'une largeur de rainure de chacune des rainures de barrette (24) à la largeur de bande de roulement développée (TDW) n'étant pas inférieur à 0,003 et pas supérieur à 0,016 ; et pour un ensemble des parties d'appui (31) opposées les unes aux autres à travers le plan équatorial de pneu (CL), une plage (C1, C2) prise dans la direction circonférentielle de pneu par chacune des rainures de barrette (24) dans une des parties d'appui (31) étant incluse dans une plage (D1, D2) prise dans la direction circonférentielle de pneu par le bloc correspondant (31B) dans l'autre partie d'appui (31), dans lequel pour des ensembles des parties d'appui (31, 32) opposées les unes aux lautres à travers un plan équatorial de pneu (CL), dans chacun des ensembles des parties d'appui (31, 32), des positions de blocs (31B, 32B) adjacentes dans la direction latérale de pneu sont identiques dans la direction circonférentielle de pneu,
le pneumatique (1) comprenant en outre des rainures de barrette d'épaulement (25A, 25B) formées dans chacune des parties d'appui d'épaulement (33) et s'étendant dans la direction latérale de pneu,
**caractérisé en ce que**
un rapport d'une profondeur de rainure (DLo) de chacune des rainures de barrette d'épaulement (25A, 25B) à une profondeur de rainure (GD) de chacune des rainures principales circonférentielles (23) n'est pas inférieur à 0,03 et pas supérieur à 0,5, et
les rainures de barrette d'épaulement (25A, 25B) comportent des premières rainures de barrette d'épaulement (25A) et des secondes rainures de barrette d'épaulement (25B) ayant des largeurs de rainure différentes, et les premières rainures de barrette d'épaulement (25A) et les secondes rainures de barrette d'épaulement (25B) sont disposées dans les parties d'appui d'épaulement (33), en alternance dans la direction circonférentielle de pneu.

2. Pneumatique selon la revendication 1, dans lequel
pour toutes les rainures de barrette (24), une partie d'extrémité interne de direction latérale de pneu est sollicitée vers un côté dans une direction de rotation de pneu par comparaison avec une partie d'extrémité externe de direction latérale de pneu.

3. Pneumatique selon la revendication 1 ou 2, dans lequel
pour l'ensemble des parties d'appui (31) opposées l'une à l'autre à travers le plan équatorial de pneu (CL), en supposant que D11 et D12 désignent des distances d'une ligne centrale de direction circonférentielle de pneu de la plage prise dans la direction circonférentielle de pneu par chacune des rainures de barrette (24) dans l'une des parties d'appui (31) à des parties d'extrémité de la plage prise dans la direction circonférentielle de pneu par le bloc correspondant (31B), dans l'autre partie d'appui (31), 0,65 ≤ D11/D12 ≤ 1,65.

4. Pneumatique selon l'une quelconque des revendications 1 à 3, dans lequel pour la même partie d'appui de la pluralité de parties d'appui (31, 32), un rapport d'une longueur de direction circonférentielle de pneu (LC1) de la rainure de barrette (24) à une longueur de direction circonférentielle de pneu (LD1) du bloc (31B, 32B) n'est pas inférieur à 0,2 et pas supérieur à 0,6.

5. Pneumatique selon l'une quelconque des revendications 1 à 4, dans lequel un rapport d'aspect de chacun des blocs (31B, 32B) formant la partie d'appui (31, 32) n'est pas inférieur à 1,05 et pas supérieur à 1,65.

6. Pneumatique selon l'une quelconque des revendications 1 à 5, dans lequel la rainure de barrette (24) comprend au moins un point de flexion (K1, K2), et un rapport d'une longueur (LK1), d'une partie d'extrémité de direction circonférentielle de pneu du bloc (32B) au point de flexion (K1) le long de la direction circonférentielle de pneu, vers la longueur de direction circonférentielle de pneu (LB) du bloc (32B) n'est pas inférieur à 0,1 et pas supérieur à 0,4.

7. Pneumatique selon l'une quelconque des revendications 1 à 6, comprenant en outre
une partie d'encoche (26) formée sur au moins un côté de chacun des blocs (31B, 32B), le côté orienté vers la rainure principale circonférentielle correspondante (21, 22, 23), dans lequel
un rapport d'une longueur maximale de direction circonférentielle de pneu (L26) de la partie d'encoche (26) à la longueur maximale de direction circonférentielle de pneu (LB) du bloc n'est pas inférieur à 0,015 et pas supérieur à 0,070, et un rapport d'une longueur maximale de direction latérale de pneu (W26) de la partie d'encoche (26) à une longueur maximale de direction latérale de pneu (E) du bloc (31B, 32B) n'est pas inférieur à 0,007 et pas supérieur à 0,035.

8. Pneumatique selon l'une quelconque des revendications 1 à 7, dans lequel un rapport d'une longueur de direction latérale de pneu (E) du bloc (31B, 32B) à la largeur développée de bande de roulement (TDW) n'est pas inférieur à 0,15 et pas supérieur à 0,2.

9. Pneumatique selon l'une quelconque des revendications 1 à 8, dans lequel
un rapport d'une longueur de pas d'agencement (PB) des blocs (31B, 32B) dans la direction circonférentielle de pneu à une longueur de circonférence externe de pneu le long de la direction circonférentielle de pneu n'est pas inférieur à 0,010 et pas supérieur à 0,030.

10. Pneumatique selon l'une quelconque des revendications 1 à 9, comprenant en outre
des parties d'appui d'épaulement (33) fournies à l'extérieur des rainures principales circonférentielles externes (23) dans une direction latérale de pneu, dans lequel un rapport d'une longueur de direction latérale de pneu (Wa1, Wa2) de chacune des parties d'appui (31, 32) autres que les parties d'appui d'épaulement (33) à une longueur de direction latérale de pneu (Wb) de chacune des parties d'appui d'épaulement (33), n'est pas inférieur à 0,70 et pas supérieur à 1,00.

11. Pneumatique selon la revendication 10, dans lequel un rapport de la longueur de direction latérale de pneu (Wb) de la partie d'appui d'épaulement (33) à une longueur de direction circonférentielle de pneu (TL) d'une surface de contact au sol d'une partie de bande de roulement (20) n'est pas supérieur à 0,20.
